(19) Europäisches Patentamt
European Patent Office
Office européen des brevets

(11) EP 2 743 324 B1

(12) **EUROPÄISCHE PATENTSCHRIFT**

(45) Veröffentlichungstag und Bekanntmachung des Hinweises auf die Patenterteilung:
**22.07.2020 Patentblatt 2020/30**

(21) Anmeldenummer: **13195561.9**

(22) Anmeldetag: **03.12.2013**

(51) Int Cl.:
***C09J 133/08*** *(2006.01)* ***C09J 133/10*** *(2006.01)*
***C08K 5/00*** *(2006.01)* ***C08K 3/00*** *(2018.01)*
***C08L 33/00*** *(2006.01)* ***C08L 33/08*** *(2006.01)*
***C08L 33/10*** *(2006.01)*

(54) **UV-VERNETZBARE HAFTKLEBEMASSEN MIT UV-ABSORBER, VERFAHREN ZU DEREN HERSTELLUNG UND ANWENDUNG**

UV-CROSSLINKABLE ADHESIVE MATERIALS WITH UV ABSORBERS, METHODS OF MAKING THEM AND THEIR USES

MASSES ADHÉSIVES RÉTICULABLES PAR UV AVEC ABSORBEURS D'UV, LEUR PROCÉDÉ DE FABRICATION ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2012 DE 102012222813**

(43) Veröffentlichungstag der Anmeldung:
**18.06.2014 Patentblatt 2014/25**

(73) Patentinhaber: **tesa SE**
**22848 Norderstedt (DE)**

(72) Erfinder:
- **Prenzel, Alexander, Dr.**
  **20259 Hamburg (DE)**
- **Zöllner, Stephan, Dr.**
  **21244 Buchholz /Nordheide (DE)**
- **Siebert, Michael, Dr.**
  **22869 Schenefeld (DE)**

(56) Entgegenhaltungen:
**EP-A2- 2 735 594** **US-A1- 2004 167 262**
**US-A1- 2005 239 916** **US-A1- 2008 306 201**
**US-A1- 2012 172 482**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 743 324 B1

**Beschreibung**

Gegenstand der Erfindung sind schmelzbare und UV-vernetzbare Haftklebemassen, wie Acrylathotmelts oder Hotmeltformulierungen, die nach gängigen Hotmeltverfahren als auch auf üblichen Hotmeltbeschichtungsanlagen verarbeitet werden können, ohne dass sich die Produkteigenschaften bei einer (ungewollten) Abweichung der Prozessparameter sofort ändern. Die erfindungsgemäßen Zusammensetzungen sind UV-vernetzbare und schmelzbare Haftklebemassen umfassend (i) Gemische von UV-vernetzbaren Polyacrylat-Polymeren, die ausgewählt sind aus a) Gemischen von UV-vernetzbaren Polymeren mit mindestens einem Photoinitiator, der kovalent an das Polymerrückgrat der Polymere gebunden ist, und b) Gemische von UV-vernetzbaren Polyacrylat-Polymeren, Monomeren und mindestens einem Photoinitiator sowie (ii) mindestens ein UV-Stabilisator sowie Verfahren zu deren Herstellung als auch deren Verwendung als Haftmittel.

UV-Licht vernetzbare Polymerisate und ihre Verwendung als Klebstoff, z. B. als Schmelzhaftklebstoff, sind z. B. aus DE-A-24 11 169, EP-A-246 848, DE-A-40 37 079 oder DE-A-38 44 444 bekannt.

Für Schmelzklebstoffe werden Polymerisate verwendet, welche bei Raumtemperatur fest sind und bei höheren Temperaturen aus der Schmelze auf die gewünschten Substrate aufgetragen werden können.

Dabei ist es üblich, die benötigten Polymerisate schon im fließfähigen Zustand z.B. in Tankwagen anzuliefern und bis zur späteren Verarbeitung im fließfähigen Zustand zu halten. Bei den benötigten erhöhten Temperaturen kann es daher zu thermisch induzierten Vernetzungen kommen, die durch Zusatz von wirksamen thermischen Stabilisatoren gegenüber thermischen Vernetzungsreaktionen teilweise gehemmt oder unterbunden werden. Beschrieben wird dies bspw. in US 2001 024 699 A1 und US 2004 167 262 A1. Die Stabilisatoren dürfen insbesondere die anwendungstechnischen Eigenschaften bei der späteren Verwendung als Klebstoff nicht negativ beeinflussen.

Als besonders problematisch haben sich UV-vernetzbare Polymerisate, welche zur späteren UV-Vernetzung einen Photoinitiator enthalten, erwiesen, denn die verwendeten Stabilisatoren können die Wirkung des Photoinitiators beeinträchtigen und so zu einer ungünstigen Vernetzung und zu ungünstigen anwendungstechnischen Eigenschaften, z. B. einer mangelhaften Kohäsion in der Klebstoffschicht, führen.

Um eine vorzeitige Reaktion des Photoinitiators zu verhindern, müssen zusätzlich zur Stabilisierung gegenüber thermischen Reaktionen sowohl der Transport als auch die Verarbeitung des UV-vernetzbaren Polyacrylats so durchgeführt werden, dass das reaktive Polymer oder die reaktive Mischung möglichst keiner direkten oder indirekten Lichteinwirkung beispielsweise durch Sonneneinstrahlung oder anderen Strahlenquellen ausgesetzt ist. Besonders schwierig ist dies unmittelbar nach der Schmelzauftragung und vor der definierten UV-Vernetzung in der Hotmeltbeschichtungsanlage. Eine zusätzliche Stabilisierung mittels UV-Absorber und/oder Inhibitoren vor der Verarbeitung würde der Fachmann jedoch nicht durchführen, da er erwartet, dass dies zu einer Beeinträchtigung der UV-Vernetzung führt.

Neben den zuvor genannten Problemen hinsichtlich der Stabilisierung der UV-vernetzbaren Polymere oder Mischungen bzw. Formulierungen, welche solche UV-vernetzbaren Polymere enthalten, weisen solche Systeme noch ein weiteres Problem auf, nämlich die stabile und gezielte Einstellung der gewünschten Produkteigenschaften im Hinblick auf die Prozessführung. Denn, je höher der Einfluss der UV-Dosis auf die Produkteigenschaften ist, desto schwieriger ist es, Abweichungen von der gewünschten Prozessführung zu kompensieren, sodass eine spezifikationsgerechte Fertigung der Produkte gewährleistet wird. Eine ungewollte Änderung der Prozessparameter ergibt sich z.B. zwangsläufig aus der Leistung der UV-Strahler, die mit steigender Lebensdauer bzw. Nutzung sinkt. Daraus resultiert eine sich stetig ändernde UV-Dosis, woraus sich wiederum, sofern nicht gegengesteuert wird, auch ein veränderter Vernetzungsgrad ergibt. Ein weiterer Einflussfaktor ist die genaue Geschwindigkeit der Beschichtungsanlage mit der die schmelzbare Haftklebemasse an der Strahlenquelle vorbeigeführt wird. Beide Einflussfaktoren können sich kontinuierlich bzw. ständig ändern. Um ihnen zu begegnen müsste in sehr kurzen und regelmäßigen Abständen eine Eichung stattfinden, damit die Haftklebeeigenschaften der UVvernetzen Haftmittel nur in einem sehr engen Bereich konstant gehalten werden können.

Die Auswahl kommerziell verfügbarer UV-vernetzbarer Polymere, insbesondere von Polyacrylaten, beschränkt sich auf zwei Gruppen.

Die erste umfasst Polymere, an deren Polymerrückgrat die Photoinitiatoren gebunden sind. Gerade bei solchen Systemen existieren keine Freiheitsgrade hinsichtlich der Photoinitiatorkonzentration und das Prozessfenster ist ein enger Grat von einer Untervernetzung (kohäsives Versagen) bis zur Übervernetzung (zu starker Verlust an Adhäsion) bei Klebemassen. Neben der Einstellung der UV-Dosis als Prozessparameter müsste die Beschichtungsanlage oder der generelle Verarbeitungsprozess an das Polymer angepasst werden, um die gewünschten Produkteigenschaften zu erzielen. Diese Maßnahmen sind sehr aufwendig und teilweise nicht umsetzbar oder unerwünscht. Es besteht daher ein großer Bedarf an entsprechenden Haftklebemassen, die die genannten Maßnahmen vermeiden oder es erlauben konstantere Produkteigenschaften trotz leicht schwankender Prozessparameter stabil zu halten.

Die zweite Gruppe umfasst Polymere, die mit Photoinitiatoren, welche nicht polymergebunden sind, abgemischt werden. Um die Effektivität der Vernetzung und somit die Kohäsion zu erhöhen, werden häufig Reaktivverdünner eingesetzt. Es handelt sich hierbei um auf den Mechanismus der UV-Vernetzung abgestimmte Monomere, die zusätzlich

zur Einstellung der Viskosität und somit zur Senkung der Verarbeitungstemperatur bei der Schmelzverarbeitung eingesetzt werden können. Nachteilig hierbei ist, dass solche Systeme häufig als sogenannte "ready-to-coat"-Massen eingesetzt werden und dass die Konzentration des Reaktivverdünners häufig auf die Photoinitiatorkonzentration abgestimmt werden muss (oder umgekehrt), um die gewünschten Produkteigenschaften zu erhalten. Zur Erzielung anderer Eigenschaftsprofile können zwar neben der Variation der UV-Dosis auch die Formulierungen mit weiteren Photoinitiatoren und/oder Reaktivverdünnern vom Anwender abgemischt werden, jedoch bedarf es einer ziemlich genauen Kenntnis der Formulierung sowie eines erheblichen Versuchsaufwandes, um zum einen die vom Hersteller schon optimierte Rezeptur wirklich zu verbessern und zum anderen auch sicher zu gehen, dass alle zusätzlich hinzugefügten Additive bzw. Reagenzien keine negativen Wechselwirkungen auslösen.

Aufgabe der Erfindung war die Bereitstellung von UV-vernetzbaren und schmelzbaren Haftklebemassen, wie Acrylathotmelts bzw. Hotmeltformulierungen, die sowohl nach gängigen Hotmeltverfahren als auch auf gängigen Hotmeltbeschichtungsanlagen verarbeitet werden können. Dabei sollte ihr Verarbeitungsprozess so stabil sein, dass (ungewollte) Abweichungen von den Prozessparametern bzw. von der Prozessführung nicht sofort zu einer Änderung der gewünschten Produkteigenschaften führen. Aufgabe der Erfindung war daher die Entwicklung von Zusammensetzungen, die während der üblichen Handhabung und Verarbeitung zu Haftklebemitteln hinsichtlich einer Über- oder Untervernetzung weniger empfindlich sind. Derartige Zusammensetzungen verbessern die Qualität als auch die Reproduzierbarkeit der Verfahren und machen sie wirtschaftlicher.

Eine weitere Aufgabe der Erfindung war die Bereitstellung eines Verfahrens zur Herstellung der Haftklebemassen, ein Verfahren zu ihrer Verarbeitung sowie die Herstellung von Haftmitteln, wie Klebebändern, Etiketten oder Transferklebebändern.

Überraschend und dem Fachmann nicht offensichtlich wurde gefunden, dass das Prozessfenster hinsichtlich einer stabilen Verarbeitung von UV-vernetzbaren Polymeren oder Formulierungen umfassend mindestens ein UV-vernetzbares Polymer, insbesondere von UV-vernetzbaren Polyacrylaten oder von Formulierungen umfassend mindestens ein UV-vernetzbares Polyacrylat, gezielt eingestellt bzw. vergrößert werden kann, indem zusätzlich mindestens ein UV-Stabilisator aus der Gruppe der UV-Absorber und/oder Inhibitoren verwendet wird, ohne, dass die Produkteigenschaften der vernetzten Haftklebemasse negativ beeinflusst werden.

Gegenstand der Erfindung ist eine Zusammensetzung, enthaltend ein aus der Schmelze zu verarbeitendes wasser- und lösungsmittelfreies Polyacrylat und einen Stabilisator aus der Gruppe der UV-Absorber und/oder Inhibitoren, ein Verfahren zur Herstellung einer schmelzbaren und UV-vernetzbaren Haftklebemasse sowie eine schmelzbare, UV-vernetzbare Haftklebemasse umfassend mindestens ein UV-vernetzbares Polyacrylat und mindestens ein UV-Stabilisator aus der Gruppe der UV-Absorber und/oder Inhibitoren.

Die Erfindung umfasst weiterhin die Verwendung von UV-vernetzbaren schmelzbaren Haftklebemassen, die zumindest einen UV-Stabilisator aus der Gruppe der UV-Absorber und/oder Inhibitoren umfasst, zur Herstellung von Kabelwickelbändern sowie die Herstellung von ein- oder doppelseitigen Klebebändern, Labeln, Etiketten, wobei diese Aufzählung nur beispielhaft und nicht abschließend gemeint ist.

Ebenso überraschend wurde gefunden, dass die Produkteigenschaften der UV-vernetzbaren und schmelzbaren Haftklebemassen weiterhin gezielt mittels Variation der UV-Dosis einstellbar sind, wobei die Eigenschaften jedoch viel stabiler eingestellt werden können und durch ungewollte Veränderungen bzw. Abweichungen der Prozessparameter bzw. der Prozessführung kaum beeinflusst werden. Als Maß hierfür kann unter anderem die Dosisabhängigkeit der jeweiligen Messgröße, wie z.B. Klebkraft, Gelwert, elastischer Anteil (gemessen mittels Mikroscherweg) und Scherstandszeiten, bestimmt werden. Je geringer die Steigung, desto robuster ist das Verfahren gegenüber (ungewollten) Prozessschwankungen und desto stabiler sind die Produkteigenschaften. Die erfindungsgemäßen Zusammensetzungen reagieren weniger empfindlich auf Schwankungen der UV-Dosis wie nachfolgend anhand der Beispiele belegt wird.

Gegenstand der Erfindung ist eine Zusammensetzung, wie sie in den beigefügten Ansprüchen definiert ist.

Der UV-Stabilisator ist bevorzugt ausgewählt aus einem UV-Absorber, insbesondere einer organischen Verbindung, die UV-induziert tautomere Struktur bildet oder einem anorganischen UV-Absorber, bevorzugt einem nanoskaligen Metalloxid, wie Titanoxid, oder einem UV-Inhibitor, der insbesondere mindestens einen Radikalfänger umfasst. Alternativ kann der UV-Stabilisator auch ein Gemisch umfassend mindestens jeweils einen UV-Absorber und UV-Inhibitor sein. Bei der Ausbildung tautomerer Strukturen werden bei vielen organischen UV-Absorbern, wie den 1,3- oder 1,4-Hydroxy- und Imin-Gruppen oder 1,3-Hydroxy- und Carbonyl-Gruppen-substituierten Verbindungen, intramolekulare Wasserstoffbrückenbindungen ausgebildet oder erhalten teilweise ionischen Charakter. Bekannt ist der H-Shift in sechsgliedrigen intramolekularen Wasserstoffbrückenbindungen tautomerer Strukturen.

Besonders gut kann das Prozessfenster der zu verarbeitenden schmelzbaren und UV-vernetzbaren Haftklebemasse mit im Wesentlichen gleichbleibenden klebtechnischen Eigenschaften ausgeweitet werden, wenn der UV-Stabilisator mit einer definierten Konzentration in der Zusammensetzung vorliegt, die auf die Konzentration des Photoinitiators in Abhängigkeit von dem Verhältnis der Absorptionsmaxima abgestimmt ist. Dabei wurde gefunden, dass die Konzentration in Bezug zum Photoinitiator nach den folgenden Formeln eingestellt werden muss.

Weiterhin wurde überraschend gefunden, dass die Aufgabe gelöst wird, wenn die Konzentration des UV-Stabilisators aus der Gruppe der UV-Absorber und/oder Inhibitoren auf die Konzentration des Photoinitiators abgestimmt ist, wobei zwei Fälle zu unterscheiden sind: I) Das Absorptionsmaximum des UV-Stabilisators ist nahezu identisch mit dem des Photoinitiators, wobei sich die Wellenlängen der Absorptionsmaxima um weniger als 50 nm unterscheiden und somit die Überlappung der beiden spektralen Absorptionsbereiche sehr groß ist (Formel 1). Die Formel gilt sowohl für polymergebundene als auch für frei im Polymer vorliegende Photoinitiatoren. Oder alternativ II) wenn das Absorptionsmaximum des UV-Stabilisators nicht mit dem des Photoinitiators übereinstimmt und sich die Wellenlängen der Absorptionsmaxima um mindestens 50 nm unterscheiden und somit die Überlappung der beiden spektralen Absorptionsbereiche gering ist (Formel 2). Diese Formel gilt ebenfalls für polymergebundene als auch für frei im Polymer vorliegende Photoinitiatoren.

Gegenstand der Erfindung sind daher Zusammensetzungen in denen der UV-Stabilisator mit einer definierten Konzentration in der Zusammensetzung vorliegt, die auf die Konzentration des Photoinitiators abgestimmt ist und vom Verhältnis der Absorptionsmaxima gemäß nachfolgenden Formeln 1 und 2 abhängt, die jeweils unter den Voraussetzungen I) und II) angewendet werden, wobei der UV-Stabilisator insbesondere aus der Gruppe der UV-Absorber und/oder Inhibitoren ausgewählt ist:

I) die Wellenlänge des Absorptionsmaximums des UV-Stabilisators und des Photoinitiators unterscheiden sich um plus/minus kleiner gleich 50 nm, insbesondere um plus/minus kleiner 50 nm, bevorzugt um plus/minus kleiner gleich 49 nm, besonders bevorzugt plus/minus kleiner 20 nm oder kleiner gleich 19 nm,

$$0{,}01 \leq \frac{c_{UV-Stabilisator}}{c_{Photoinitiator}} \leq 0{,}25, \quad (1)$$

wobei c die Konzentration der jeweiligen Substanz in mol/100 g Polymer ist, oder

II) die Wellenlänge des Absorptionsmaximums des UV-Stabilisators und des Photoinitiators unterscheiden sich um plus/minus größer oder gleich 50 nm, bevorzugt plus/minus größer oder gleich 51 nm, besonders bevorzugt um plus/minus größer oder gleich 55 nm, weiter bevorzugt sind 60 nm,

$$0{,}05 \leq \frac{c_{UV-Stabilisator}}{c_{Photoinitiator}} \leq 0{,}55, \quad (2)$$

wobei c die Konzentration der jeweiligen Substanz in mol/100 g Polymer ist. Die vorgenannten Formeln gelten sowohl für die polymergebundenen als auch für die im Polymer vorliegenden Photoinitiatoren, wobei sich die Konzentration auf den Gehalt des Photoinitiators in Mol im Polymer oder den Gehalt an kovalent gebundenen Gruppen eines Photoinitiators (Photoinitiator-Gruppen) in Mol am Polymerbackbone bezieht. Überraschend wurde die alternative Gültigkeit beider Formeln 1 und 2 für den Sonderfall gefunden, dass sich die Wellenlängen des Absorptionsmaximums des UV-Stabilisators und des Photoinitiators um 50 nm unterscheiden.

Das mit UV-Licht vernetzbare Polyacrylat enthält gemäß vorstehender Definition zur Beschleunigung der UV-Vernetzung einen Photoinitiator, der dem Polymer zugesetzt oder kovalent an das Polyacrylat gebunden sein kann. Durch Bestrahlung mit energiereichem Licht, insbesondere UV-Licht bewirkt der Photoinitiator eine Vernetzung der Polymere, vorzugsweise durch eine chemische Pfropfreaktion des Photoinitiators mit einer räumlich benachbarten Polymerkette. Insbesondere kann die Vernetzung durch Einschub einer Carbonylgruppe des Photoinitiators in eine benachbarte C-H-Bindung unter Ausbildung einer -C-C-O-H Gruppierung erfolgen.

Die erfindungsgemäße Zusammensetzung ist insbesondere eine schmelzbare und UV-vernetzbare Haftklebemasse, und enthält besonders bevorzugt als vernetzbares Polymer ein Polyacrylat. Dabei werden vorzugsweise Polyacrylate mit intrinsischer Haftklebrigkeit eingesetzt. Somit ist vorzugsweise der Zusatz von weiteren Klebrigmachern auf Spezialanwendungen beschränkt. Besonders bevorzugt umfasst die Zusammensetzung durch UV vernetzbare Polyacrylat-Polymere, die Polymere der Ester der Acrylsäure und/oder der Methacrylsäure umfassen. Diese Polymere liegen im Wesentlichen als Ester der Acrylsäure oder Methacrylsäure vor. Ferner umfassen die UV-vernetzbaren Polyacrylat-Polymere Acrylat-basierte Hybridsysteme umfassend Polyester-Polyether-Hybride, wie beispielsweise Polyester-Polyether basierte Urethan-Acrylate oder Polyester-Polyether basierte veresterte Acrylate.

Darüber hinaus kann die Zusammensetzung als Polyacrylat-Polymere auch Co-Polymerisate umfassen von (a) monomeren Acrylaten oder Methacrylaten oder Prepolymeren von Acrylaten oder Methacrylaten, insbesondere der Ester, jeweils unabhängig mit weiteren (b) radikalisch polymerisierbaren Monomeren, Prepolymeren und/oder Polymeren, wobei vorzugsweise diese (b)-Monomere keine unter (a) definierten Monomere umfassen. Die radikalisch polymerisierbaren Monomere (b) umfassen vorzugsweise jeweils unabhängig ausgewählt aus b.1 bis b.6:

(b.1) Acrylate ausgewählt aus linearen, verzweigten und cyclischen 1 bis 18 C-Atome umfassenden, mit Alkyl-Gruppen funktionalisierten Alkyl(meth)acrylaten, vorzugsweise linearen oder cyclischen C1 bis C10 Alkyl(meth)acrylaten, Acrylsäure und/oder Methacrylsäure,

(b.2) Vinyl-substituierte polymerisierbare Monomere, Prepolymere und/oder Polymere, insbesondere Propionsäurevinylester, unsubstituiertes, mono- oder disubstiuiertes Acrylamid, ethylenisch ungesättigte Nitrile, Vinylhalogenide oder Vinylether, soweit nicht unter (b.5) definiert,

(b.3) Kohlenwasserstoffe mit zwei olefinischen Doppelbindungen, wie Butadien, Isopren und Chloropren,

(b.4) Monomere oder Prepolymere mit mindestens einer ungesättigten radikalisch polymerisierbaren Gruppe und mindestens einer Carbonsäure-, Sulfonsäure- oder Phosphonsäure-Gruppe, vorzugsweise sind nach einer Alternative Monomere mit mindestens zwei Carbonsäure-Gruppen, besonders bevorzugt beta-Acryloxy-propansäure, Itaconsäure, Maleinsäure, Fumarsäure, wobei Acrylsäure, Methacrylsäure unter b.1 erfasst werden,

(b.5) Monomere oder Prepolymere mit mindestens einer ungesättigten radikalisch polymerisierbaren Gruppe und mindestens einer Hydroxyl-Gruppe, insbesondere C1- bis C10-Hydroxyalkyl(meth)acrylate, mono- oder disubstituiertes (Meth)acrylamid,

(b.6) Monomere oder Prepolymere mit mindestens einer ungesättigten radikalisch polymerisierbaren Gruppe, insbesondere mindestens einer Doppelbindung, und mindestens einer weiteren funktionellen Gruppe ausgewählt aus Isocyanat-, Amino-, Amid-, Ether-, Polyether- und Glycidyl-Gruppen, insbesondere haftverbessernde Monomere, vorzugsweise Phenyloxyethylglykolmono(meth)acrylat, Glycidyl(meth)acrylat, Amino(meth)acrylate wie 2-Aminoethyl(meth)acrylat), mono- oder disubstituiertes (Meth)acrylamid, soweit nicht unter b.2 enthalten,

wobei als (b) jeweils unabhängig ein oder mehrere radikalisch polymerisierbare Monomere, Prepolymere und/oder Polymere oder Gemische dieser ausgewählt werden. Die unter (a) definierten Monomere umfassen vorzugsweise keine Alkylmethacrylate, Alkylacrylate oder Ester von Alkyl(meth)acrylate, Alkylacrylate mit Alkyl C2 bis C18, die unter (b) zusammengefasst sind.

Ebenfalls erfindungsgemäß sind Zusammensetzungen, welche Acrylat-basierte Hybridsysteme umfassen, beispielsweise die in US 2005 239 916 A1 beschriebenen. Dies sind UV-vernetzbare Polyester-Polyether basierte Urethan-Acrylate und Polyester-Polyether basierte veresterte Acrylate. Bei dem besonders bevorzugten Polyacrylat handelt es sich um ein Polymerisat, welches durch radikalische Polymerisation von Acrylmonomeren, worunter auch Methacrylmonomere verstanden werden, und gegebenenfalls weiteren, copolymerisierbaren Monomeren erhältlich ist.

Auch die US 2001 024 699 A1 offenbart erfindungsgemäß verwendbare, schmelzbare und UV-vernetzbare Polyacrylat-Polymere. Auf die dort offenbarten Polymere wird vollständig Bezug genommen und zum Gegenstand der Offenbarung der vorliegenden Anmeldung gemacht. Besonders bevorzugt können die dort offenbarten Polyacrylat-Polymere mit kovalent gebundenem Photoinitiator in den Zusammensetzungen verwendet werden.

Ebenfalls Gegenstand der Erfindung sind Zusammensetzungen UV-vernetzbarer Polyacrylat-Polymere, die Co-Polymererisate von (a) monomeren Acrylaten oder Methacrylaten oder Prepolymere von Acrylaten oder Methacrylaten jeweils unabhängig mit weiteren (b.1) Acrylaten umfassen, wobei die (b.1) Acrylate ausgewählt sind aus linearen, verzweigten oder cyclischen 1 bis 18 C-Atome umfassenden Alkyl-Gruppen von Alkyl(meth)acrylaten und das Polyacrylat zu größer gleich 40 Gew.-% bis 100 Gew.-% des Polyacrylats auf C1-C18 Alkyl(meth)acrylaten basiert. Besonders bevorzugt ist das Polyacrylat zu mindestens 60 Gew.-%, ganz besonders bevorzugt zu mindestens 80 Gew.-% aus C1-C18 Alkyl(meth)acrylaten aufgebaut.

Die Alkyl(meth)acrylate umfassen vorzugsweise aliphatische und cycloaliphatische C1-C10 Alkyl(meth)acrylate, z.B. Methyl(meth)acrylat, Ethyl(meth)acrylat, n-Butyl(meth)-acrylat, 2-Ethylhexyl(meth)acrylat, Isooctyl(meth)acrylat, Isobornyl(meth)-acrylat.

Weitere (b) Monomere, aus denen das Polyacrylat aufgebaut sein kann, sind z. B. (b.2) Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatischen Kohlenwasserstoffe mit 2 bis 8 C-Atomen und 1 oder 2 Doppelbindungen oder Mischungen dieser Monomere. Als vinylaromatische Verbindungen kommen z. B. Vinyltoluol α- und *p*-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt sind Vinylether von 1 bis 4 C-Atome enthaltenden Alkoholen.

Als (b.3) Kohlenwasserstoffe mit 2 bis 8 C-Atomen und zwei olefinischen Doppelbindungen sind Butadien, Isopren und Chloropren bevorzugt.

Als Monomere (b.4) kommen insbesondere in Betracht Monomere mit Carbonsäure-, Sulfonsäure- oder Phosphonsäuregruppen, wobei Monomere mit Carbonsäuregruppen bevorzugt sind. Besonders bevorzugte Monomere sind z.B. Acrylsäure, β-Acryloxypropansäure, Itaconsäure, Maleinsäure oder Fumarsäure. Acrylsäure und Methacrylsäure können ebenfalls bevorzugt sein, soweit sie nicht bereits als (b.1) eingesetzt wurden.

Weitere Monomere sind z. B. auch die (b.5) Hydroxylgruppen enthaltenden Monomere, insbesondere C1-C10-Hydroxyalkyl(meth)acrylate sowie unsubstituiertes, mono- und disubstituiertes (Meth)acrylamid.

Darüber hinaus bevorzugte (b.6) Monomere sind Phenyloxyethylglykolmono-(meth)acrylat, Glycidyl(meth)acrylat, Amino(meth)acrylate wie 2-Aminoethyl-(meth)acrylat. Sowie weitere Monomere, die außer der Doppelbindung noch weitere funktionelle Gruppen tragen, um beispielsweise die Haftung weiter zu verbessern, sie umfassen vorzugsweise Isocyanat-, Amino-, Hydroxy-, Amid- oder Glycidyl-Gruppen.

UV-vernetzbare Haftklebemassen gemäß der erfindungsgemäßen Zusammensetzung umfassen besonders bevorzugt UV-vernetzbare Co-Polymerisate, die abgeleitet sind aus (a) Estern monomerer Acrylate oder Methacrylate oder Prepolymere von Acrylatestern oder Methacrylatestern sowie jeweils unabhängig aus mindestens einem oder mehreren weiteren radikalisch polymerisierbaren Monomeren, Prepolymeren und/oder Polymeren, die ausgewählt sind aus (b.1) bis (b.6).

Die erfindungsgemäßen Zusammensetzungen weisen vorzugsweise je 100 Gew.-Teile Polyacrylat kleiner gleich 2 Gew.-Teile bis 0,0001 Gew.-Teile eines organischen Lösemittels und/oder Wasser auf, wobei als Lösemittel typische organische Lösemittel gelten, wie Ether, Ester, Ketone, Alkohole, Dichlormethan, THF, Aceton etc. Nicht als Lösemittel gelten Monomere der Polyacrylayte.

Bevorzugte UV-Stabilisatoren sind ausgewählt aus 1. organischen UV-Absorbern, die UV-strahlungsinduziert tautomere Strukturen bilden oder anorganischen UV-Absorbern und 2. Radikalfängern als UV-Inhibitor.

Zugleich liegen vorzugsweise 0,0001 bis 1 mol, besonders bevorzugt 0,0002 bis 0,1 mol, ganz besonders bevorzugt 0,0003 bis 0,01 mol des Photoinitiators oder der als Photoinitiator wirksamen, an das Polymerrückgrat gebundenen Molekülgruppe, pro 100 g Polyacrylat in der Zusammensetzung vor.

Bevorzugte organische UV-Absorber umfassen 2-Hydroxyphenyl-Derivate, Oxalanilid-Derivate, an C-3 aromatisch substituierte Arcylsäure-Derivate, wie Zimtsäure-Derivate, Urocaninsäure (Imidazol-4-Acrylsäure), organische Nickel-Komplexe oder Umbelliferon, und die anorganischen UV-Absorber umfassen bevorzugt Metalloxide, insbesondere von Titan und Zink, wie Titandioxid, Zinkoxid oder auch Eisenoxid, insbesondere nicht-pigmentäre Metalloxide, wie nichtpigmentäres Titandioxid, Eisenoxidpigmente und Zinkoxid, bevorzugt ist nanoscaliges $TiO_2$. Generell können alle als UV-Absorber geeigneten Metalloxide von Metallen des Periodensystems der Elemente eingesetzt werden. Gemäß Punkt 2. umfassen die UV-Inhibitoren Alkyl-substituierte gehinderte Amine, insbesondere 2,2,6,6-Alkyl-substituierte Piperidin-Derivate. Ebenfalls erfindungsgemäß können Kombinationen von verschiedenen UV-Absorbern oder auch UV-Absorber und UV-Inhibitoren verwendet werden.

Weiter bevorzugt umfassen organische UV-Absorber als 2-Hydroxyphenyl-Derivate 2-(2-Hydroxyphenyl)-2*H*-benzotriazole (BTZ, Formel IIa), (2-Hydroxyphenyl)-s-triazine (HPT, Formel IIb), Hydroxybenzophenone (BP, Formel IIc) und Oxalanilide (Formel IId) sowie jeweils unabhängig deren jeweilige Derivate, beispielsweise die C-3 aromatisch substituierten Arcylsäure-Derivate, die Phenyl-substituierten Zimtsäure-Derivate oder Urocaninsäure (Imidazol-4-Acrylsäure). Bevorzugt werden die mit Wasserstoff substituierten Verbindungen von IIa, IIb, IIc und/oder IId verwendet oder deren zumindest teilweise mit Alkyl-Gruppen substituierten Derivate.

Ein UV-Stabilisator umfasst generell eine Verbindung mit ausgeprägtem Absorptionsvermögen für Ultraviolettstrahlung. UV-Stabilisatoren werden als Lichtschutzmittel (UV-Stabilisatoren) sowohl zur Verbesserung der Lichtbeständigkeit von Beschichtungen, Kunststoffen und Kautschuken (als Alterungsschutzmittel), Gläsern (UV-Filter), Verpackungsmaterialien und anderen technischen Produkten als auch als Sonnenschutzmittel in kosmetischen Präparaten eingesetzt. Die UV-Absorber funktionieren nach dem Prinzip der Lichtabsorption, wobei die absorbierte Menge an UV-Strahlung dabei eine Funktion der Dicke des durchstrahlten Körpers und der Stabilisatorkonzentration ist. Die absorbierte Energie wird im Anschluss als thermische Energie wieder abgegeben. Üblicherweise bilden die organischen UV-Stabilisatoren dabei intermediär eine tautomere Struktur aus, wobei sich nach Abgabe der thermischen Energie wieder die ursprüngliche Struktur zurückbildet.

Die wichtigsten und besonders bevorzugten UV-Absorber-Klassen im Sinne der Erfindung sind 2-(2-Hydroxyphenyl)-2*H*-benzotriazole (BTZ, IIa), (2-Hydroxyphenyl)-s-triazine (HPT, IIb), Hydroxybenzophenone (BP, IIc) und Oxalanilide (IId), die sich unter anderem in der Breite der Absorption (vor allem im Bereich von 290 - 400 nm) unterscheiden.

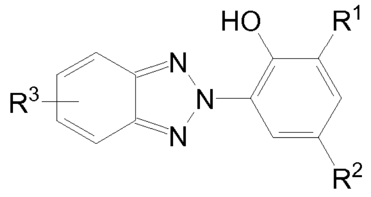

IIa

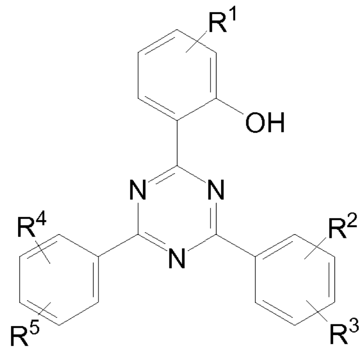

IIb

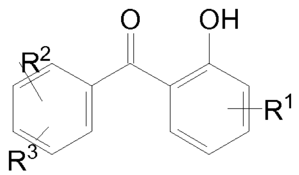

IIc

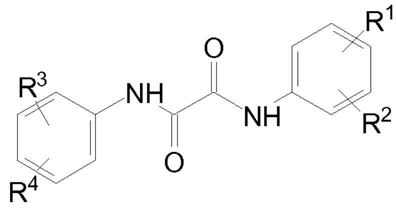

IId

Die Reste $R^1$, $R^2$, $R^3$, $R^4$ und/oder $R^5$ der Formeln IIa, IIb, IIc und IId können jeweils unabhängig in Formel IIa, IIb, IIc oder IId einem Wasserstoff oder einer Alkyl-Gruppe entsprechen, wobei die Alkyl-Gruppe linear, verzweigt oder cyclisch und vorzugsweise nicht subsituiert ist und besonders vorzugsweise 1 bis 20 C-Atome umfassen kann.

Als UV-Absorber wirken auch ebenfalls bevorzugte in 3-Stellung Phenyl-substituierte Acrylate (Zimtsäure-Derivate), gegebenenfalls mit Cyano-Gruppen in 2-Stellung, Salicylate, organische Nickel-Komplexe sowie Naturstoffe wie Umbelliferon und die körpereigene Urocaninsäure.

Die vorgenannten UV-Inhibitoren absorbieren keine UV-Strahlung, sondern wirken dort, wo der Abbau stattfindet, als Wasserstoffdonatoren. Ein Wasserstoffatom wird dabei beispielsweise an ein Peroxidradikal abgegeben, wobei der Inhibitor bei dieser Reaktion ein stabiles Radikal bildet und somit wie ein Radikalfänger wirkt. Als Inhibitoren werden bevorzugt sogenannte HALS (hindered amine light stabilizers) verwendet, besonders bevorzugt sterisch gehinderte 2,2,6,6-Alkylsubstituierte Piperidin-Derivate.

Die Photoinitiatoren in den Zusammensetzungen umfassen die üblichen Ketone oder Diketone und deren Derivate. Generell liegt in der Zusammensetzung mindestens ein Photoinitiator oder auch ein Gemisch von Photoinitiatoren vor. So umfassen die Zusammensetzungen der UV-vernetzbaren und schmelzbaren Haftklebemassen mindestens einen Photoinitiator ausgewählt aus (i.a) mindestens einem im Gemisch vorliegenden Photoinitiator der ausgewählt ist aus Acetophenon, Benzoinether, Benzyldialkylketole, Benzophenon, Benzil, Thioxanthon, Phenylglyoxylat, Benzoylphosphinat, Benzoylphosphinoxid, Bisbenzoylphosphinoxid, $\alpha$-Aminoketon oder deren Derivate, oder Titanocen, Bis-[$\eta^5$-2,4-cyclopentadien-1-yl)-bis-[2,6-difluoro-3-(1*H*-pyrrol-1-yl)phenyl]-titan, Oximester, [1-(4-Phenylsulfanylbenzoyl)heptylidenamino]benzoat und [1-[9-Ethyl-6-(2-methylbenzoyl)- carbazol-3-yl]ethylidenamino]acetat und deren Derivate, oder mindestens einem kovalent an das Polymerrückgrat gebundenen Photoinitiator gemäß (i..b) der durch radikalische Copolymerisation einer ethylenisch substituierten Linker-Photoinitiator-Gruppe in das Polymerrückgrat einpolymerisiert ist, wobei die Photoinitiator-Gruppe, auch Molekülgruppe genannt, einen Rest umfasst, der abgeleitet ist aus Acetophenon, Benzoinether, Benzyldialkylketole, Benzophenon, Benzil, Thioxanthon, Phenylglyoxylat, Benzoylphosphinat, Benzoylphosphinoxid, Bisbenzoylphosphinoxid, $\alpha$-Aminoketon oder deren Derivate, oder Titanocen, Bis-[$\eta^5$-2,4-cyclopentadien-1-yl)-bis-[2,6-difluoro-3-(1*H*-pyrrol-1-yl)phenyl]-titan, Oximester, [1-(4-Phenyl-sulfanylbenzoyl)heptylidenamino]benzoat und [1-[9-Ethyl-6-(2-methylbenzoyl)-carbazol-3-yl]ethylidenamino]acetat und deren Derivate. Insbesondere ist die ethylenische Gruppe eine Acryl- oder Methacrylgruppe. Bevorzugt ist der Rest oder die Photoinitiator-Gruppe aus einem vorgenannten Photoinitiator abgeleitet, insbesondere durch Substitution eines Wasserstoffs oder einer Alkyl-Gruppe. Ferner kann der Rest oder die Photoinitiator-Gruppe über die Linker-Photoinitiator-Gruppe, die vorzugsweise eine Acryl- oder Methacryl- oder auch eine Alkyl-Gruppe mit einer endständigen Vinyl-Gruppe umfasst, an das Polymerrückgrat gebunden werden. Die Linker-Photoinitiator-Gruppe umfasst vorzugsweise zusätzlich zur Photoinitiator-Gruppe noch 3 bis 30 C-Atome und ist außer, dass sie auf einer Acryl- oder Methacrylgruppe basieren kann und die Photoinitiator-Gruppe umfasst, unsubstituiert. Die vorgenannten Photoinitiator-Gruppen entsprechen in der

Regel den vorgenannten Verbindungen oder den entsprechend rein mit Wasserstoff und/oder Alkyl-Gruppen substituierten Derivaten.

Bevorzugt ist der Photoinitiator in der Linker-Photoinitiator-Gruppe bzw. Molekülgruppe, insbesondere über eine Linker-Gruppe, an das Polyacrylat gebunden. Besonders bevorzugte Photoinitiatoren wurden mittels radikalischer Copolymerisation in die Polymerkette eingebaut. Dabei werden vorzugsweise Photoinitiatoren mit einer Acryl- oder Methacryl-Gruppe eingesetzt. Besonders bevorzugt werden als copolymerisierbare Photoinitiatoren Acetophenon- oder Benzophenonderivate, mit mindestens einer olefinischen Gruppe, vorzugsweise einer ethylenisch ungesättigten Gruppe eingesetzt, die vorzugsweise als Acryl- oder Methacrylgruppe vorliegt.

Dabei kann die ethylenisch ungesättigte Gruppe direkt an den Phenylring des Acetophenon- oder Benzophenonderivats in der Linker-Photoinitiator-Gruppe gebunden sein, üblicherweise an dem Phenylring der Linker mit der ethylenisch ungesättigten Gruppe, insbesondere der ethylenisch ungesättigten Endgruppe. Dabei umfasst dieser bivalente Linker zwischen dem Phenylring und der ethylenisch ungesättigten Gruppe eine Spacergruppe (Abstandshalter) mit vorzugsweise 1 bis 100 C-Atomen, bevorzugt 2 bis 50, besonders bevorzugt 2 bis 10 C-Atomen.

Geeignete Acetophenon- oder Benzophenonderivate die als Photoinitator oder als Linker-Photoinitiator-Gruppe eingesetzt werden können, sind z. B. in EP-A-346 734, EP-A-377 199, DE-A-40 37 079 und DE-A-38 44 444 beschrieben und sind durch diesen Verweis auch in der vorliegenden Anmeldung offenbart. Bevorzugte Linker-Photoinitiator-Gruppen umfassen Acetophenon- und Benzophenonderivate der allgemeinen Formel (I)

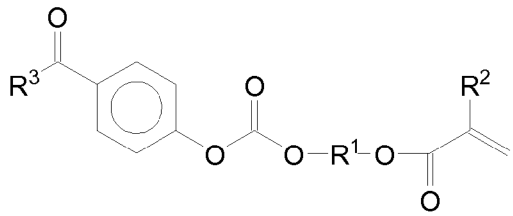

(I)

worin $R^1$ für einen organischen Rest mit 1 bis 30 C-Atomen, insbesondere 1 bis 10 C-Atome, alternativ 2 bis 8 C-Atome, $R^2$ für ein H-Atom oder eine Methylgruppe und $R^3$ für eine gegebenenfalls substituierte Phenylgruppe oder eine C1-C4-Alkylgruppe steht. $R^1$ steht besonders bevorzugt für eine Alkylengruppe, insbesondere für eine C2-C8-Alkylengruppe. $R^3$ steht besonders bevorzugt für eine Methylgruppe oder eine Phenylgruppe.

Ebenfalls bevorzugt sind Photoinitiatoren, welche im Anschluss an die radikalische Polymerisation durch eine polymeranaloge Reaktion an das Polymer gebunden werden. Diese Vorgehensweise würde einer Pfropfung des Polymers oder einer nachträglichen Funktionalisierung des Polymers entsprechen.

Bevorzugte erfindungsgemäße Zusammensetzung enthalten jeweils unabhängig auf 100 Gew.-Teile Polyacrylat-Polymer bezogen:

- 0,0001 bis 1 mol Photoinitiator auf 100 Gew.-Teile Polyacrylat-Polymer
- 0 bis 2 Gew.-Teile Lösemittel, insbesondere 0,0 bis 1,0 Gew.-Teile Lösemittel, bevorzugt 0,0 bis 0,5 Gew.-Teile, besonders bevorzugt 0,0 bis 0,2 Gew.-Teile
- 0,05 bis 5 Gew.-Teile primäre und/oder sekundäre Alterungsschutzmittel mit einem Molekulargewicht kleiner gleich 1500 g/mol, polymere HydroxyGruppen und optional Ether-Gruppen enthaltende Alterungsschutzmittel oder mit mindestens einer Phosphit-Gruppe, und
- 0 bis 80 Gew.-Teile Klebharze, insbesondere 0 bis 45, alternativ 40 bis 80 Gew.-Teile, wie bspw. Abietinsäureester, Terpen-Phenol-Harze, C5- und C9-Harze. Eingesetzt werden dabei vorzugsweise als Polyacrylat-Polymer Co-Polymererisate von (a) monomeren Acrylaten oder Methacrylaten oder Prepolymere von Acrylaten oder Methacrylaten mit weiteren (b.1) Acrylaten ausgewählt aus Alkyl(meth)acrylaten mit linearen, verzweigten oder cyclischen 1 bis 18 C-Atome umfassenden Alkyl-Gruppen, wobei das Polyacrylat zu größer gleich 80 Gew.-% bis 100 Gew.-% auf C1-C18 Alkyl(meth)acrylat basiert.

Das Polyacrylat hat vorzugsweise einen K-Wert von 30 bis 80, besonders bevorzugt von 40 bis 60, gemessen als einprozentige (1 g Polymer/100 mL) toluolische Polymerlösung bei 25 °C in einem VOGEL-OSSAG-Viskosimeters. Der K-Wert nach FIKENTSCHER ist ein Maß für das Molekulargewicht, welches mittels der kinematischen Viskosität der Polymerlösung bestimmt wird. Nach Normierung auf die Viskosität des Toluols wird die relative Viskosität erhalten, aus der sich nach FIKENTSCHER der K-Wert errechnen lässt *(*Polymer 1967, 8, 381).

Die statische Glasübergangstemperatur (Tg) des Polyacrylats beträgt vorzugsweise -60 bis +10 °C, besonders bevorzugt -55 bis 0 °C, ganz besonders bevorzugt -55 bis -10 °C. Die Glasübertragungstemperatur des Polyacrylates lässt sich nach üblichen Methoden wie Differentialthermoanalyse oder Differential Scanning Calorimetry (s. z.B. ASTM 3418/82, sogenannte "midpoint temperature") bestimmen.

Die Polyacrylate, die insbesondere als schmelzbare und UV-vernetzbare Haftklebemassen in der Zusammensetzung eingesetzt werden, können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die neuen Copolymerisate durch Polymerisation der Monomeren in Lösungsmitteln, insbesondere in Lösungsmitteln eines Siedebereichs von 50 bis 150 °C, vorzugsweise von 60 bis 120 °C unter Verwendung der üblichen Menge an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Als Lösungsmittel kommen insbesondere Alkohole, wie Methanol, Ethanol, n- und Isopropanol, n- und Isobutanol, vorzugsweise Isopropanol und/oder Isobutanol sowie Kohlenwasserstoffe wie Toluol und insbesondere Benzine eines Siedebereichs von 60 bis 120 °C in Frage. Ferner können Ketone, wie Aceton, Methylethylketon, Methylisobutylketon und Ester, wie Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.-%, bezogen auf das eingesetzte Lösungsmittelgemisch, enthalten, vorgezogen werden.

Als Polymerisationsinitiatoren kommen bei der Lösungspolymerisation beispielsweise Azoverbindungen, Ketonperoxide und Alkylperoxide in Betracht.

Weiterhin können alle dem Fachmann geläufigen Arten der kontrollierten radikalischen Polymerisation durchgeführt werden, wobei beispielhaft ATRP (*atom transfer radical polymerization*), RAFT (*reversible addition fragmentation chain transfer polymerization*) und SFRP (*stable free radical polymerization* teilweise auch Nitroxid-mediierte Polymerisatio genannt) aufgelistet seien.

Nach der Polymerisation in Lösung können die Lösungsmittel gegebenenfalls untervermindertem Druck abgetrennt werden, wobei man bei erhöhten Temperaturen, beispielsweise im Bereich von 100 bis 150 °C arbeitet. Die Polymerisate können dann in lösungsmittelfreiem Zustand, d. h. als Schmelzen, eingesetzt werden. In manchen Fällen ist es auch von Vorteil, die neuen UV-vernetzbaren Polymerisate durch Polymerisation in Substanz, d. h. ohne Mitverwendung eines Lösungsmittels, herzustellen, wobei chargenweise oder auch kontinuierlich, z.B. nach den Angaben der US-PS 4 042 768, gearbeitet werden kann.

Die in der erfindungsgemäßen Zusammensetzung verwendeten Polyacrylate sind vorzugsweise lösungsmittelfrei. Ein Restgehalt an Lösungsmitteln, z.B. organischen Lösungsmitteln und/oder Wasser, kann jedoch unter 2 Gew.-Teilen, insbesondere unter 1 Gew.-Teil, besonders bevorzugt unter 0,5 Gew.-Teilen, ganz besonders bevorzugt unter 0,2 Gew.-Teilen Lösungsmittel, bezogen auf 100 Gew.- Teile Polyacrylat, betragen.

Die erfindungsgemäße Zusammensetzung umfasst neben dem Polyacrylat und dem UV-Stabilisator aus der Gruppe der UV-Absorber und/oder Inhibitoren noch mindestens einen Stabilisator gegenüber thermischen Reaktionen und Alterungsprozessen aus der Gruppe der primären und/oder sekundären Alterungsschutzmitteln.

Erfindungsgemäße primäre Alterungsschutzmittel umfassen Verbindungen, welche mindestens eine aromatisch gebundene, insbesondere an eine Phenylgruppe gebundene Hydroxylgruppe aufweisen und ausschließlich aus Wasserstoff, Kohlenstoff und Sauerstoffatomen aufgebaut sind. Insbesondere können 1 bis 3 derartige Hydroxylgruppen vorhanden sein.

Bevorzugte Alterungsschutzmittel weisen in beiden ortho-Stellungen zu mindestens einer der aromatischen Hydroxylgruppen eine C1-C6-Alkylgruppe, vorzugsweise eine tert-Butyl-Gruppe auf.

Derartige Antioxidationsmittel sind z.B. insbesondere solche der Formel (III)

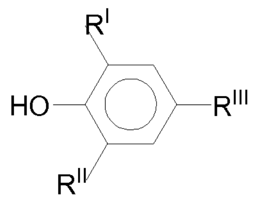

(III)

worin $R^I$, $R^{II}$ und $R^{III}$ unabhängig voneinander für eine C1-6-Alkylgruppe stehen. Besonders bevorzugt stehen $R^I$ und $R^{II}$ für eine teritäre Butylgruppe; und $R^{III}$ für eine C1-C4-Alkylgruppe, ganz besonders bevorzugt steht $R^{III}$ für eine Methylgruppe. Besonders bevorzugt ist die Verbindung mit $R^I$ und $R^{II}$ = tertiär Butyl und $R^{III}$ = Methyl (erhältlich als Ralox® BHT von der Fa. Raschig GmbH).

Bevorzugt sind weiterhin Alterungsschutzmittel, die mindestens eine Ethergruppe enthalten. Es können z.B. 1 bis 6 Ethergruppen vorhanden sein. Besonders geeignete Ethergruppen sind Alkoxygruppen, insbesondere C1-C4 Alkoxygruppen und besonders bevorzugt Methoxygruppen. Die Alkoxygruppen sind vorzugsweise direkt an ein aromatisches Ringsystem, insbesondere eine Phenylgruppe gebunden, besonders bevorzugt an eine Phenylgruppe, an die auch die obigen Hydroxylgruppen gebunden sind.

Bevorzugte Antioxidationsmittel sind daher auch chemische Verbindungen der folgenden Formel (IV)

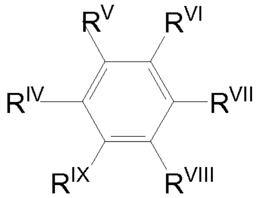

(IV)

worin mindestens einer, bevorzugt einer der Reste $R^{IV}$ bis $R^{IX}$ für eine Hydroxylgruppe und mindestens einer, bevorzugt einer der Reste $R^{IV}$ bis $R^{IX}$ für eine Ethergruppe der Formel

-O-X

oder der Formel

-Y-O-X

worin X für eine einwertige Kohlenwasserstoffgruppe steht, die gegebenenfalls durch Hydroxylgruppen, Estergruppen oder weitere Ethergruppen substituiert oder unterbrochen sein kann und ein Molgewicht von bis zu 1000 g/mol hat und Y für eine zweiwertige Kohlenwasserstoffgruppe, welche gegebenenfalls ebenso durch Hydroxylgruppen, Estergruppen oder weitere Ethergruppen substituiert oder unterbrochen sein kann und ein Molgewicht von bis zu 500 g/mol hat, steht und die übrigen Reste $R^{IV}$ bis $R^{IX}$ unabhängig voneinander für ein Wasserstoffatom oder eine C1 bis C6 Alkylgruppe stehen.

Ein bevorzugter Fall sind Ethergruppen der Formel -O-X, in denen X für eine Alkylgruppe, insbesondere eine C1-C4 Alkylgruppe, besonders bevorzugt eine Methylgruppe steht; entspricht somit einer Alkoxygruppe, insbesondere Methoxygruppe. In diesem Fall steht insbesondere nur einer der Reste $R^{IV}$ bis $R^{IX}$ für eine Hydroxylgruppe, ein oder zwei der Reste für eine Alkoxygruppe, insbesondere Methoxygruppe, und die übrigen Reste $R^{IV}$ bis $R^{IX}$ unabhängig voneinander für ein Wasserstoffatom oder eine C1 bis C6 Alkylgruppe, insbesondere auch *tert*-Butylgruppen (vorzugsweise in ortho Position zur Hydroxylgruppe). Beispielhaft sei Methoxyphenol genannt.

Ein bevorzugter Fall für Ethergruppen -Y-O-X sind Ethergruppen, in denen Y für eine Alkylengruppe, insbesondere eine C2-C6 Alkylengruppe steht, welche durch eine Estergruppe unterbrochen ist und X für eine Alkylarylgruppe steht, wobei die Alkylgruppe ebenfalls durch Ether- oder Estergruppen unterbrochen sein kann und die Arylgruppe durch Hydroxylgruppen oder Alkylgruppen, insbesondere C1-C6 Alkylgruppen substituiert sein kann. Ein Beispiel hierfür sind Irganox® 245 und Irganox® 1076 von der BASF, ehemals Ciba Geigy.

Ganz besonders bevorzugt sind Alterungsschutzmittel, welche zusätzlich zur aromatisch gebundenen Hydroxylgruppe eine Ethergruppe enthalten und welche zumindest bei einer der aromatisch gebundenen Hydroxylgruppen zwei orthoständige C1-C6-Alkyl, insbesondere zwei *tert*-Butylgruppen, als Substituenten aufweisen.

Bei dem Alterungsschutzmittel handelt es sich bevorzugt um eine niedermolekulare Verbindung mit einem Molekulargewicht unter 1500 g/mol, insbesondere unter 1000 g/mol. In Betracht kommen jedoch auch polymere Alterungsschutzmittel mit entsprechenden Hydroxylgruppen und gegebenenfalls Ethergruppen.

Als sekundäres Alterungsschutzmittel wird bevorzugt eines mit mindestens einer Phosphitgruppe $P(-O-)_3$ eingesetzt. Vorzugsweise enthält das Alterungsschutzmittel eine bis drei Phosphitgruppen, besonders bevorzugt eine Phosphitgruppe.

Bei dem Stabilisator handelt es sich im Allgemeinen um eine niedermolekulare Verbindung mit einem Molekulargewicht unter 1500 g/mol, insbesondere unter 1000 g/mol.

Vorzugsweise handelt es sich um eine Verbindung der Formel (V)

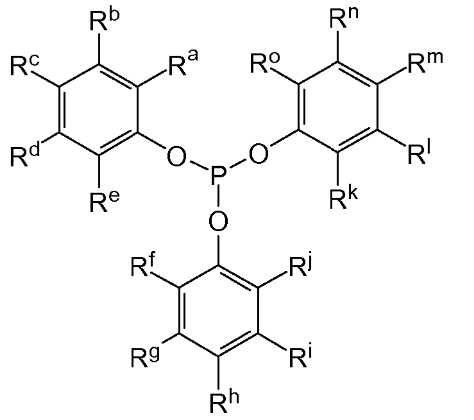

(V)

worin $R^a$ bis $R^o$ unabhängig voneinander für ein H-Atom oder eine organische Gruppe mit bis zu 20 C-Atomen und gegebenenfalls mit Heteroatomen wie O, N, Si oder S stehen.

Vorzugsweise stehen an jedem Phenylring mindestens drei, insbesondere drei bis vier der jeweiligen Reste R für H-Atome. Vorzugsweise stehen ein oder zwei, insbesondere einer der Reste steht an jedem Phenylring für eine organische Gruppe mit bis zu 20 C-Atomen.

Bei der organischen Gruppe als Rest R kann es sich z.B. um eine Alkylgruppe, Alkenoxygruppe oder eine Alkylsiloxangruppe handeln. Genannt seien n-Alkyl, iso-Alkyl- und *tert*-Alkylgruppen, Ethylenoxid, Propylenoxidgruppen, geradkettige und verzweigte Alkylsiloxane, insbesondere Dimethylsiloxane. Besonders bevorzugt ist eine Alkylgruppe, z.B. eine C1-C20-Alkylgruppe.

Beispielhaft genannt sei ein Stabilisator, in dem $R^c$, $R^h$ und $R^m$ für eine C9-Alkylgruppe stehen; ein derartiger Stabilisator ist als Irgafos® TNPP von BASF, ehemals Ciba Geigy, erhältlich.

Es können auch verschiedene Antioxidationsmittel im Gemisch eingesetzt werden. Übliche primäre Alterungsschutzmittel wirken als C-Radikalfänger und werden oxidiert, wie die genannten Phenolderivate. Die sekundären Alterungsschutzmittel bauen durch Autoxidationsprozesse entstandene Hydroperoxide ab. Daher weisen beide Alterungsschutzmittel anders als die UV-Stabilisatoren zumindest intermediär radikalische Zwischenstufen/-produkte auf.

Der Gehalt an primären und/oder sekundären Alterungsschutzmitteln in der Zusammensetzung beträgt vorzugsweise 0,05 bis 5 Gew.-Teile, besonders bevorzugt 0,1 bis 2 Gew.-Teile, ganz besonders bevorzugt 0,1 bis 1 Gew.-Teile, bezogen auf 100 Gew.-Teile Polyacrylat.

Die erfindungsgemäße Zusammensetzung kann neben dem Polyacrylat und dem Stabilisator aus der Gruppe der UV-Absorber und/oder Inhibitoren gegebenenfalls noch weitere Zusatzstoffe, z.B. Tackifier (Klebharze), wie Abietinsäureester, Terpen-Phenol-Harze, C5- und C9-Harze oder Weichmacher enthalten.

Gemäß einer weiteren Ausführungsform umfasst die Erfindung ein Verfahren zur Herstellung einer Zusammensetzung umfassend eine UV-vernetzbare und schmelzbare Haftklebemasse, sowie Zusammensetzungen erhältlich nach diesem Verfahren, indem (i) Gemische von UV-vernetzbaren Polyacrylat-Polymeren, die ausgewählt sind aus (i.a) Gemischen von UV-vernetzbaren Polymeren mit mindestens einem Photoinitiator, der kovalent an das Polymerrückgrat der Polymere gebunden ist, und (i.b) Gemischen von UV-vernetzbaren Polyacrylat-Polymeren, Monomeren und mindestens einem Photoinitiator mit (ii) mindestens einem UV-Stabilisator gemischt werden.

Die in dem Verfahren eingesetzten UV-vernetzbaren Polyacrylat-Polymere sind vorzugsweise ausgewählt aus vorgenannten Polyarcrylat-Polymeren der Ester der Acrylsäure und/oder der Methacrylsäure, Acrylat basierten Hybridsystemen, umfassend Polyester-Polyether-Hybrid Systeme, wie Polyester-Polyether basierte Urethan-Acrylate oder Polyester-Polyether basierten veresterten Acrylaten sowie Co-Polymererisaten von (a) und (b), wie vorstehend definiert. Ein bevorzugtes UV-vernetzbares Polyacrylat-Polymer kann auf der Umsetzung von etwa 93 Gew.-%, 2-Ethylhexylacrylat, 4 Gew.-% Acrylsäure und 3 Gew.-% Acrylnitril basieren.

Dabei wird eine definierte Konzentration des mindestens einen UV-Stabilisators insbesondere aus der Gruppe der UV-Absorber und/oder Inhibitoren, eingesetzt, die auf die Konzentration des Photoinitiators abgestimmt ist und vom Verhältnis der Absorptionsmaxima gemäß den vorstehend genannten Formeln 1 und 2 abhängt.

Gemäß einer weiteren Ausführungsform ist Gegenstand der Erfindung eine Zusammensetzung erhältlich nach dem Verfahren als auch daraus hergestellte Transferklebemasse, insbesondere Transferklebebänder.

Weiter ist Gegenstand der Erfindung die Verwendung der Zusammensetzung zur Herstellung von Transferklebebändern, Folien, Beschichtungen, Beschichtungen definierter Abmessungen, Klebeband, ein- oder doppelseitig beschichteten Trägern, insbesondere Etiketten, mit der schmelzbaren Haftklebemasse beschichteten Trägern, wobei die Träger aus den folgenden Materialien hergestellt sein können: Papier, textile Träger, Folien, Vliese und Gewebe, die insbesondere aus Kunststoffen, wie Polyester, Polyolefine oder PVC sein können. Die Flächengewichte der Träger

können zwischen 20 bis 250 g/m$^2$ liegen, üblich sind 90 bis 130 g/m$^2$.

Ebenso Gegenstand der Erfindung ist die Verwendung der Zusammensetzung zur Herstellung eines Haftmittels, wie einer Transferklebemasse, eines Transfer-klebebands, eines beschichteten Trägers, insbesondere Klebeband, als auch die auf diese Weise erhältlichen Haftmittel, indem die schmelzbare Haftklebemasse als Schmelze im Temperaturbereich von 60 bis 200 °C

- in Form einer gleichförmigen Beschichtung einer Schichtdicke von 2 bis 200 μm ausgetragen wird, optional auf einen Träger oder einen Transferträger aufgetragen wird, und
- die Beschichtung mit einer energiereichen Strahlung mit einer Strahlungsenergie zwischen 10 bis 150 mJ/cm$^2$, insbesondere zwischen 20 bis 120 mJ/cm$^2$ vernetzt wird.

Die flächigen Haftmittel, insbesondere in Form eines Selbstklebeartikels, umfassen einen mit einer Zusammensetzung beschichteten Träger, insbesondere ein mit einer UV-vernetzbaren oder UV-vernetzten Haftklebstoffmasse beschichteten Träger, wobei das flächige Haftmittel ausgewählt ist aus einem Etikett, Klebeband, Kabelwickelband oder einer Schutzfolie oder einer flächigen Transferklebemasse oder einem Transferklebeband. Besonders bevorzugte Klebebänder sind zum Umwickeln von Kabeln geeignet und umfassen einen vorzugsweise textilen Träger und eine auf mindestens einer Seite des Trägers aufgebrachte UV-vernetzbare, schmelzbare Haftklebemasse oder eine UV-vernetzte erfindungsgemäße Haftklebemasse.

Ebenso Gegenstand der Erfindung ist die Verwendung eines erfindungsgemäßen Klebebandes zum Ummanteln von langgestrecktem Gut, wobei das Klebeband in einer Schraubenlinie um das langgestreckte Gut geführt wird, insbesondere wird das langgestreckte Gut in axialer Richtung von dem Band umhüllt sowie auch ein langgestrecktes Gut, wie insbesondere ein Kabelsatz, ummantelt mit einem Klebeband.

Somit eigenen sich die erfindungsgemäßen Zusammensetzungen zur Herstellung von Beschichtungen, insbesondere eignet sie sich als Schmelzhaftklebstoff und entsprechend zur Herstellung von Schmelzhaftklebstoffbeschichtungen, z.B. auf Etiketten, Klebebändern, Folien, Vliesen und Geweben. Die Etiketten können z.B. aus Papier oder Kunststoffen wie Polyester, Polyolefine oder PVC sein. Die Klebebänder oder Folien können ebenfalls aus den vorstehenden Kunststoffen sein.

Zur Herstellung der Beschichtungen können die erfindungsgemäßen Zusammensetzungen vorzugsweise als Schmelze auf die zu beschichtenden Substrate aufgetragen werden. Vorzugsweise wird die Zusammensetzung dazu auf 60 bis 200 °C erhitzt, insbesondere auf 90 bis 160 °C erhitzt, so dass sie als Schmelze vorliegt. Die Schmelze der Zusammensetzung kann gegebenenfalls bei hohen Temperaturen, z.B. von 60 bis 160 °C, insbesondere von 80 bis 140 ° C, mehrere Tage, z.B. eine Woche, gelagert oder transportiert werden, ohne dass eine thermische Vernetzung festzustellen ist. Später kann die Zusammensetzung als Schmelze, d.h. im Allgemeinen bei Temperaturen von 80 bis 160°C auf Substrate oder Träger, wie sie z. B. oben genannt sind, aufgetragen werden. Bevorzugt wird die Zusammensetzung mit einer Schichtdicke von 2 bis 200 μm, besonders bevorzugt von 5 bis 150 μm, ganz besonders bevorzugt von 10 bis 100 μm aufgetragen. Die UV-Licht vernetzbaren Polyacrylate werden anschließend, insbesondere bei Raumtemperatur, mit energiereicher Strahlung, vorzugsweise UV-Licht, zur Vernetzung bestrahlt.

Im Allgemeinen werden die beschichteten Substrate dazu auf ein Transportband gelegt und das Transportband vorzugsweise mit einer definierten Geschwindigkeit an einer Strahlungsquelle, z. B. einer UV-Lampe vorbeigeführt.

Der Vernetzungsgrad der Polymerisate hängt von der Dauer und Intensität der Bestrahlung sowie dem Verhältnis von der Konzentration des erfindungsgemäßen UV-Stabilisators aus der Gruppe der UV-Absorber und/oder UV-Inhibitoren zur Konzentration des Photoinitiators ab. Vorzugsweise beträgt die Strahlungsenergie insgesamt 10 bis 150 mJ/cm$^2$ bestrahlte Fläche.

Besonders bevorzugt ist die Verwendung als Kabelwickelband. Die Wire Harnessing tape müssen die nachfolgenden Parameter erfüllen und sind Gewebe-, Vlies-, Folienträger basierte Kabelwickelbänder:

- hohe Temperaturbeständigkeit
- sehr gutem Flaggingverhalten (Quantifizierbar durch die tesa TFT-Methode) bei geringer bzw. steuerbarer ARK (Steuerung der KKR für unterschiedliche Träger). Im Bereich Wire Harnessing kann die Klebkraft-Rückseite nicht beliebig erhöht werden, da das Band aus Kosten- und Applikationsgründen stets ohne Trennpapier verwendet wird, also auf sich selbst gewickelt wird.
- gutes Auffließen auf unterschiedlichen Untergründen (z.B. Kabelummantelungen X-PE, ETFE, aber auch Wellrohre (convoluted tubes).
- Trotz der Gegenwart des UV-Stabilisators aus der Gruppe der UV-Absorber und/oder Inhibitoren bleiben die Polyacrylate gut mit UV-Licht vernetzbar, insbesondere bei Einstellung des erfindungsgemäßen Verhältnisses zwischen UV-Stabilisator und Photoinitiator.

**Beispielteil**

Die folgenden beispielhaften Experimente sollen die Erfindung näher erläutern, ohne dass die Erfindung auf die dargestellten Beispiele einzuschränken.

Messmethoden (allgemein):

Durchführung der Tests: Die Messungen werden - soweit nicht ausdrücklich anders erwähnt - bei einem Prüfklima von 23 ± 1 °C und 50 ± 5 % rel. Luftfeuchte durchgeführt.

K-Wert (nach FIKENTSCHER) (Messmethode A1): Der K-Wert ist ein Maß für die durchschnittliche Molekülgröße hochpolymerer Stoffe. Zur Messung wurden einprozentige (1g/100 mL) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 1967, 8, 381 ff.).

Messmethoden (insbesondere Haftklebemassen):

180° Klebkrafttest (Messmethode H1): Ein 20 mm breiter Streifen einer auf Polyester als Schicht aufgetragenen Acrylathaftklebemasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur durchgeführt.

Die Messergebnisse sind in N/cm angegeben und sind gemittelt aus drei Messungen. Analog wurde die Klebkraft auf Polyethylen (PE) bestimmt.

Scherstandzeit (Messmethode H2):

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm · 13 mm (Länge · Breite), wobei das Klebeband die Prüfplatte am Rand überragt (beispielsweise um 10 mm entsprechend oben angegebener Länge von 30 mm). Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigt.

Bei Raumtemperatur wurde ein Gewicht von 1 kg an dem überstehenden Ende des Klebebandes befestigt. Die Messung wird bei Normalklima (23 °C, 55 % Luftfeuchtigkeit) und bei 70 °C in einem Wärmeschrank durchgeführt.

Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

Mikroschertest (Messmethode H3)

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe · Breite = 13mm · 10mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 100 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in $\mu$m angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min) ·100 / max].

TFT-Test (Messmethode H4):

Messung der Abflaggresistenz nach LV312 beziehungsweise TFT-Methode (Threshold Flagging Time): Zur Ermittlung des Flaggingverhaltens nach der TFT-Methode kommt ein Test zum Einsatz, bei dem durch die Applikation der flach präparierten Prüflinge auf einem 1½"-Kern eine zusätzliche Biegespannung erzeugt wird. Die Kombination aus Zugbelastung durch ein Prüfgewicht und Biegespannung bewirkt ein flagging-ähnliches Ablösen des Klebebandes vom verklebten oberen Ende her und ein letztendliches Versagen durch Abfallen der Prüflinge (siehe Figur 1, in der auch der schematische Aufbau gezeigt ist). Die Zeit in Minuten bis zum Abfallen ist das Ergebnis. Die ausschlaggebenden Parameter für die Haltezeit der Prüflinge sind Gewicht und Temperatur, wobei das Gewicht so zu wählen ist, dass sich Werte von mindestens 100 min ergeben.

Der zylindrisch geformte Prüfdorn ist 1½"-Pappkern mit 42 ± 2 mm Außendurchmesser, versehen mit einer Markierungslinie 5 mm neben der Scheitellinie.
Der Haftgrund ist die eigene Rückseite des Klebebands.
Der Handroller hat ein Gewicht von 2 kg.
Das Prüfgewicht beträgt 1 kg.
Das Prüfklima ist 23 ± 1 °C bei 50 ± 5 % rel. Feuchte beziehungsweise 40 °C im Wärmeschrank.

Die Prüfung erfolgt an Streifen von 19 mm breiten Klebebändern. Ein Streifen von 400 mm Länge wird auf Trennpapier geklebt und zu drei Streifen von je 100 mm Länge zugeschnitten. Dabei ist eine frische Cutterklinge zu verwenden. Die Rückseite darf nicht berührt werden. Unter eines der Enden eines jeden Streifens wird ein Pappkärtchen geklebt und der Verbund gelocht (siehe Figur 2). Die Prüfstreifen werden nun einzeln mittig auf Streifen des breiteren Haftgrunds (Klebeband in 1 ½-facher Breite des zu prüfenden Klebebands) verklebt, so dass das Pappkärtchen noch knapp (2 bis 3 mm) am Ende überlappt (siehe Figur 3). Die Prüflinge werden mit dem 2 kg-Handroller in 3 Zyklen mit einer Geschwindigkeit von 10 m/min überrollt. Die fertigen Prüfmuster, also die Prüfstreifen samt Haftgrund, werden nun so auf den Pappkern geklebt, dass das obere Ende des Prüflings den Scheitelpunkt um 5 mm überlappt (siehe Figur 4). Dabei darf nur der Haftgrund und nicht der Prüfling angedrückt werden. Die fertig präparierten Prüflinge werden für 20 ± 4 Stunden ohne Gewichtsbelastung in einem Klimaraum bei 40 °C belassen.

Danach werden Gewichte mit einer Masse von einem Kilogramm angehängt und die Messuhren gestartet. Die Messung endet nach Versagen aller drei Prüflinge eines Musters. Der Median der drei Einzelmessungen wird in Minuten angegeben. Die Haltezeit wird in Minuten angegeben.

Kommerziell erhältliche, eingesetzte Chemikalien

| *Chemische Verbindung* | *Handelsname* | *Hersteller* | *CAS-Nr.* |
|---|---|---|---|
| UV-vernetzbares Polyacrylat | acResin® A 260 UV | BASF | - |
| [2-Hydroxy-4-(octyloxy)phenyl]-methanon | Chimassorb® 81 | BASF | 1843-05-5 |
| 2,2'-Methylenbis(6-(2H-benzotriazol-2-yl)-4-1,1,3,3,tetramethylbutyl)phenol) | Tinuvin® 360 | BASF | 103597-45-1 |
| Bis(2,2,6,6-tetramethyl-4-piperidinyl)sebacat | Tinuvin® 770 | BASF | 52829-07-9 |
| Tri(nonylphenyl)phosphit | Irgafos® TNPP | BASF | 26523-78-4 |

In den folgenden Beispielen wurde jeweils acResin® A 260 UV als Haftklebemasse verwendet und mit UV-Stabilisatoren und/oder Alterungsschutzmittel abgemischt. Im Vergleichsbeispiel 1 wir kein UV-Stabilisator und kein Alterungsschutzmittel verwendet, Vergleichsbeispiel 2 umfasst hingegen nur ein Alterungsschutzmittel. Im Vergleichsbeispiel 7 wird ein nicht erfindungsgemäßes Verhältnis von UV-Stabilisator und Photoinitiator ausgetestet.

Tabelle 1: Beispiele 1 bis 7

| **Bsp** | **UV-Stabilisator** | $c_{\mathbf{Stabilisator}}$/ $c_{\mathrm{Photoinitiator}}$ [1)] | **Alterungsschutzmittel** |
|---|---|---|---|
| **VG 1** | - | - | - |
| **VG 2** | - | - | 0,3 Gew.-% Irgafos® TNPP |

(fortgesetzt)

| Bsp | UV-Stabilisator | $c_{Stabilisator}$/ $c_{Photoinitiator}$ 1) | Alterungsschutzmittel |
|---|---|---|---|
| 3 | 0,033 Gew.-% Chimassorb® 81 | 0,02 | - |
| 4 | 0,066 Gew.-% Tinuvin® 360 | 0,02 | - |
| 5 | 0,048 Gw.-% Tinuvin® 770 | 0,02 | - |
| 6 | 0,048 Gw.-% Tinuvin® 770 | 0,02 | 0,3 Gew.-% Irgafos® TNPP |
| VG 7 | 1,91 Gw.-% Tinuvin® 770 | 0,8 | - |
| 1) Die Berechnung des Verhältnisses von Stabilisator- zur Initiatorkonzentration des Photoinitiators erfolgt auf der Basis von 0,005 mol Photoinitiator pro 100 g Polyacrylat-Polymer. | | | |

AcResin® A 260 UV wurde auf ein Trägermaterial (Hostaphan RN 36) appliziert (60 g/m$^2$), anschließend mittels UV-Licht in einem Wellenlängenbereich von 200 bis 400 nm (Fa. Eltosch, Hg-Mitteldruck-Strahler, 40 mJ/cm$^2$) vernetzt. Die Prüfung der erzielten Vernetzung erfolgte anhand der Messmethode H1 bis H4.

Tabelle 2: Klebtechnische Bewertung der Beispiele 1 bis 7

| Bsp | **KK Stahl** [N/cm] | **SSZ** [min] | **MSW el. Anteil** [%] | **TFT** [min] |
|---|---|---|---|---|
| 1 | 7,2 | 306 | 91 | 274 |
| 2 | 7,0 | 315 | 89 | 266 |
| 3 | 7,6 | 300 | 82 | 278 |
| 4 | 7,5 | 278 | 84 | 274 |
| 5 | 7,5 | 302 | 80 | 266 |
| 6 | 7,7 | 289 | 79 | 273 |
| 7 | 10 | 5 | 0 | 0 |
| KK: Klebkraft gemessen nach Methode H1, SSZ: Scherstandszeit gemessen nach Methode H2, MSW: Mikroschertest nach Methode H3 | | | | |

Es ist eindeutig zu erkennen, dass die UV-Vernetzung gestört wird, sobald das erfindungsgemäße Verhältnis zwischen der Konzentration des UV-Stabilisators und der Konzentration des Photoinitiators nicht erfüllt ist (Vergleichsbeispiel 7). Alle anderen Beispiele zeigen ein ähnliches Eigenschaftsprofil und somit kann gezeigt werden, dass geringe Mengen an UV-Stabilisator die Vernetzung nicht zu stark beeinflussen. Die Scherstandzeiten der Bsp. 1 bis 6 sind innerhalb der Fehlertoleranz als ähnlich zu bewerten. Die Klebkraft auf Stahl ist für die erfindungsgemäßen Beispiele geringfügig besser und konstanter. Die erfindungsgemäßen Beispiele zeigen anhand des Mikroschertests, dass eine gute Vernetzung mit hohem elastischem Anteil der Zusammensetzung trotz der Anwesenheit der Stabilisatoren durch UV-Vernetzung erzielt wurde. Anhand der Ergebnisse in Tabelle 3 kann aufgezeigt werden, dass eine sehr gute Konstanz der klebtechnischen Eigenschaften über breit schwankende UV-Strahlungsdosen in den vernetzen Zusammensetzungen erreicht wird. Somit zeigen die erfindungsgemäßen Zusammensetzungen aufgrund der Gegenwart von UV-Stabilisatoren konstantere klebtechnische Eigenschaften und erlauben eine deutlich wirtschaftlichere und reproduzierbarere Verfahrensführung bei Verwendung der erfindungsgemäßen Zusammensetzungen.

Anschließend wurde der Einfluss der Prozessbedingen geprüft, wobei die Beispiele 1 und 3 jeweils mit 35, 40 und 45 mJ/cm$^2$ bestrahlt.

Tabelle 3: Einfluss der Prozessparameter auf die klebtechnischen Eigenschaften

| Bsp | MSW el. Anteil bei 35 mJ/cm$^2$ [%] | MSW el. Anteil bei 40 mJ/cm$^2$ [%] | MSW el. Anteil bei 45 mJ/cm$^2$ [%] |
|---|---|---|---|
| 1 | 82 | 91 | 99 |
| 3 | 82 | 82 | 83 |

## Patentansprüche

1. Zusammensetzung **dadurch gekennzeichnet, dass** die Zusammensetzung eine UV-vernetzbare und schmelzbare Haftklebemasse ist, umfassend

   (i) Gemische von UV-vernetzbaren Polyacrylat-Polymeren, die ausgewählt sind aus

   (i.a) Gemischen von UV-vernetzbaren Polymeren mit mindestens einem Photoinitiator, der kovalent an das Polymerrückgrat der Polymere gebunden ist, und
   (i.b) Gemischen von UV-vernetzbaren Polyacrylat-Polymeren, Acrylat-Monomeren und mindestens einem Photoinitiator sowie

   (ii) mindestens einen UV-Stabilisator;
   (iii) mindestens einen Stabilisator gegenüber thermischen Reaktionen und Alterungsprozessen aus der Gruppe der primären und sekundären Alterungsschutzmittel; und

   dass der UV-Stabilisator mit einer definierten Konzentration in der Zusammensetzung vorliegt, die auf die Konzentration des Photoinitiators abgestimmt ist und vom Verhältnis der Absorptionsmaxima gemäß nachfolgenden Formeln 1 und 2 abhängt, die jeweils unter den Voraussetzungen I) und II) angewendet werden:

   I) die Wellenlänge des Absorptionsmaximums des UV-Stabilisators und des Photoinitiators unterscheiden sich um plus/minus kleiner 50 nm,

$$0{,}01 \leq \frac{c_{UV-Stabilisator}}{c_{Photoinitiator}} \leq 0{,}25, \quad (1)$$

   wobei c die Konzentration der jeweiligen Substanz in mol/100 g Polymer ist,
   II) die Wellenlänge des Absorptionsmaximum des UV-Stabilisators und des Photoinitiators unterscheiden sich um plus/minus größer oder gleich 50 nm,

$$0{,}05 \leq \frac{c_{UV-Stabilisator}}{c_{Photoinitiator}} \leq 0{,}55, \quad (2)$$

   wobei c die Konzentration der jeweiligen Substanz in mol/100 g Polymer ist.

2. Zusammensetzung nach Anspruch 1, **dadurch gekennzeichnet, dass** der UV-Stabilisator ausgewählt ist aus einem UV-Absorber, UV-Inhibitor oder Gemischen enthaltend mindestens jeweils einen UV-Absorber und UV-Inhibitor.

3. Zusammensetzung nach Anspruch 1 oder 2, **gekennzeichnet durch** UV-vernetzbare Polyacrylat-Polymere umfassend

   - Polymere der Ester der Acrylsäure und/oder der Methacrylsäure;
   - Acrylat-basierte Hybridsysteme umfassend Polyester-Polyether-Hybrid Systeme, Polyester-Polyether basierte Urethan-Acrylate und Polyester-Polyether-basierte veresterte Acrylate, sowie
   - Co-Polymerisate von

   (a) monomeren Acrylaten oder Methacrylaten oder Prepolymeren von Acrylaten oder Methacrylaten jeweils unabhängig mit weiteren
   (b) radikalisch polymerisierbaren Monomeren und/oder Prepolymeren und/oder Polymeren umfassend

   (b.1) Acrylate ausgewählt aus linearen, verzweigten und cyclischen 1 bis 18 C-Atome umfassenden Alkyl-funktionalisierten Alkyl(meth)acrylaten,
   (b.2) Vinyl-substituierte polymerisierbare Monomere und/oder Prepolymere und/oder Polymere,
   (b.3) Kohlenwasserstoffe mit zwei olefinischen Doppelbindungen,
   (b.4) Monomere oder Prepolymere mit mindestens einer ungesättigten radikalisch polymerisierbaren Gruppe und mindestens einer Carbonsäure-, Sulfonsäure- oder Phosphonsäure-Gruppe,
   (b.5) Monomere oder Prepolymere mit mindestens einer ungesättigten radikalisch polymerisierbaren Gruppe und mindestens einer Hydroxyl-Gruppe,

(b.6) Monomere oder Prepolymere mit mindestens einer ungesättigten radikalisch polymerisierbaren Gruppe und mindestens einer weiteren funktionellen Gruppe ausgewählt aus Isocyanat-, Amino-, Amid-, Ether-, Polyether- und Glycidyl-Gruppen, wobei als (b) jeweils unabhängig ein oder mehrere radikalisch polymerisierbare Monomere, Prepolymere oder Polymere oder Gemische dieser ausgewählt werden.

**4.** Zusammensetzung nach Anspruch 3, **gekennzeichnet durch** UV-vernetzbare Polyacrylat-Polymere umfassend Co-Polymerisate von (a) monomeren Acrylaten oder Methacrylaten oder Prepolymere von Acrylaten oder Methacrylaten jeweils unabhängig mit weiteren (b.1) Acrylaten ausgewählt aus linearen, verzweigten oder cyclischen 1 bis 18 C-Atome umfassende Alkyl-funktionalisierte Alkyl(meth)acrylaten, wobei das Polyacrylat größer gleich 40 Gew.-% bis 100 Gew.-% des Polyacrylats auf 1 bis 18 C-Atome umfassende Alkyl-funktionalisierte Alkyl(meth)acrylaten basiert.

**5.** Zusammensetzung nach Anspruch 3 oder 4, **dadurch gekennzeichnet, dass** die UV-vernetzbaren Co-Polymerisate abgeleitet sind aus

(a) Estern monomerer Acrylate oder Methacrylate oder Prepolymeren von Acrylatestern oder Methacrylatestern und jeweils unabhängig
(b) mindestens einem oder mehreren weiteren radikalisch polymerisierbaren Monomeren und/oder Prepolymeren und/oder Polymeren ausgewählt aus (b.1) bis (b.6).

**6.** Zusammensetzung nach einem der Ansprüche 1 bis 5, **dadurch gekennzeichnet, dass** die UV-Stabilisatoren ausgewählt sind aus

1. organischen UV-Absorbern, die induziert durch UV-Strahlung tautomere Strukturen bilden oder anorganischen UV-Absorbern und
2. Radikalfängern als UV-Inhibitor.

**7.** Zusammensetzung nach Anspruch 2 oder 6, **dadurch gekennzeichnet, dass** - die organischen UV-Absorber 2-Hydroxyphenyl-Derivate, Oxalanilid- Derivate, an C-3 aromatisch substituierte Arcylsäure-Derivate, organische Nickel- Komplexe oder Umbelliferon,

- die anorganischen UV-Absorber Metalloxide, und
- die UV-Inhibitoren Alkyl-substituierte gehinderte Amine

umfassen.

**8.** Zusammensetzung nach Anspruch 2 oder 6, **dadurch gekennzeichnet, dass** - die organischen UV-Absorber als 2-Hydroxyphenyl-Derivate 2-(2-Hydroxyphenyl)-2*H*-benzotriazole (Formel IIa), (2-Hydroxyphenyl)-*s*-triazine (Formel, IIb), Hydroxybenzophenone (Formel IIc) und Oxalanilide
(Formel IId) umfassen,

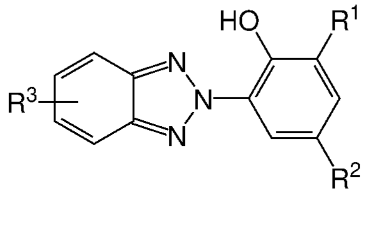

**IIa**

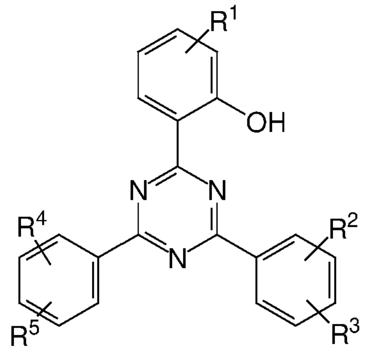

**IIb**

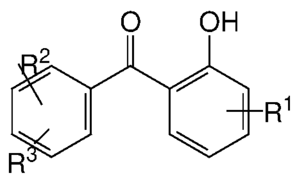

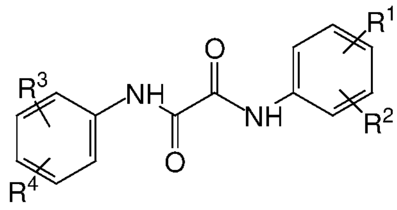

**IIc** **IId**

wobei $R^1$, $R^2$ $R^3$, $R^4$ und $R^5$ jeweils unabhängig voneinander einem Wasserstoff-Atom oder einer Alkyl-Gruppe entsprechen,

- die an C-3 aromatisch substituierten Arcylsäure-Derivate Phenyl-substituierte Zimtsäure-Derivate und Urocaninsäure umfassen,
- die anorganischen UV-Absorber als Metalloxide Titandioxid, Eisenoxid oder Zinkoxid umfassen und
- die UV-Inhibitoren als Alkyl-substituierte gehinderte Amine 2,2,6,6-Alkyl- substituierte Piperidin-Derivate umfassen.

**9.** Zusammensetzung nach einem der Ansprüche 3 bis 5, **dadurch gekennzeichnet, dass** sie kleiner gleich 2 Gew.-Teile bis 0,0001 Gew.-Teile, bezogen auf 100 Gew.-Teile Polyacrylat, eines organischen Lösemittels und/oder Wasser enthält.

**10.** Zusammensetzung nach Anspruch 1, **dadurch gekennzeichnet, dass**

- der mindestens eine gemäß (i.a) im Gemisch vorliegende Photoinitiator ausgewählt ist aus Acetophenon, Benzoinether, Benzyldialkylketole, Benzophenon, Benzil, Thioxanthon, Phenylglyoxylat, Benzoylphosphinat, Benzoylphosphinoxid, Bisbenzoylphosphinoxid, $\alpha$-Aminoketon oder deren Derivate, oder Titanocen, Bis- [$\eta^5$-2,4-cyclopentadien-1-yl)-bis-[2,6-difluoro-3-(1*H*-pyrrol-1-yl)phenyl]-titan, Oximester, [1-(4-Phenylsulfanylbenzoyl) heptylidenamino]benzoat und [1-[9-Ethyl-6-(2-methylbenzoyl)-carbazol-3-yl]ethylidenamino]acetat und deren Derivate, oder
- der mindestens eine kovalent an das Polymerrückgrat gebundene Photoinitiator gemäß (i.b) durch radikalische Copolymerisation einer ethylenisch substituierten Linker-Photoinitiator-Gruppe in das Polymerrückgrat einpolymerisiert ist, wobei die Photoinitiator-Gruppe einen Rest umfasst, der abgeleitet ist aus Acetophenon, Benzoinether, Benzyldialkylketole, Benzophenon, Benzil, Thioxanthon, Phenylglyoxylat, Benzoylphosphinat, Benzoylphosphinoxid, Bisbenzoylphosphinoxid, $\alpha$-Aminoketon oder deren Derivate, oder Titanocen, Bis-[$\eta^5$-2,4-cyclopentadien-1-yl)-bis-[2,6-difluoro-3-(1*H*-pyrrol-1-yl)phenyl]-titan, Oximester, [1-(4-Phenylsulfanylbenzoyl)heptylidenamino]benzoat und [1-[9-Ethyl-6-(2-methylbenzoyl)carbazol-3-yl]ethylidenamino]acetat und deren Derivate.

**11.** Zusammensetzung nach einem der Ansprüche 1 bis 9, **dadurch gekennzeichnet, dass** die Zusammensetzung jeweils unabhängig auf 100 Gew.-Teile Polyacrylat

- 0,0001 bis 1 mol Photoinitiator auf 100 Gew.-Teile Polyacrylat,
- 0 bis 2 Gew.-Teile Lösemittel,
- 0,05 bis 5 Gew.-Teile primäre und/oder sekundäre Alterungsschutzmittel mit einem Molekulargewicht kleiner gleich 1500 g/mol, polymere HydroxyGruppen und optional Ether-Gruppen enthaltende Alterungsschutzmittel oder mit mindestens einer Phosphit-Gruppe, und
- 0 bis 80 Gew.-Teile Klebharze enthält.

**12.** Zusammensetzung nach einem der Ansprüche 1 bis 11, **dadurch gekennzeichnet, dass** der K-Wert des Polyacrylates größer gleich 30 bis 80 ist, gemessen nach der hierin beschriebenen Methode als einprozentige (1g/100 mL) toluolische Polymerlösung bei 25 °C.

**13.** Zusammensetzung nach einem der Ansprüche 1 bis 12, **dadurch gekennzeichnet, dass** die statische Glasübergangstemperatur (Tg), gemessen nach ASTM 3418/82 als "midpoint temperature", des Polyacrylates größer gleich -60 bis +10 °C ist.

**14.** Verfahren zur Herstellung einer Zusammensetzung nach einem der Ansprüche 1 bis 13, die eine UV-vernetzbare und schmelzbare Haftklebemasse ist, umfassend das Mischen von

(i) Gemischen von UV-vernetzbaren Polyacrylat-Polymeren, die ausgewählt sind aus

(i.a) Gemischen von UV-vernetzbaren Polymeren mit mindestens einem Photoinitiator, der kovalent an das Polymerrückgrat der Polymere gebunden ist, und
(i.b) Gemischen von UV-vernetzbaren Polyacrylat-Polymeren, Acrylat- Monomeren und mindestens einem Photoinitiator mit

(ii) mindestens einem UV-Stabilisator;
(iii) mindestens einen Stabilisator gegenüber thermischen Reaktionen und Alterungsprozessen aus der Gruppe der primären und sekundären Alterungsschutzmittel;

wobei der mindestens eine UV-Stabilisator mit einer definierten Konzentration eingesetzt wird, die auf die Konzentration des Photoinitiators abgestimmt ist und vom Verhältnis der Absorptionsmaxima gemäß nachfolgenden Formeln 1 und 2 abhängt, die jeweils unter den Voraussetzungen I) und II) angewendet werden:

I) die Wellenlänge des Absorptionsmaximums des UV-Stabilisators und des Photoinitiators unterscheiden sich um plus/minus kleiner 50 nm,

$$0{,}01 \leq \frac{c_{UV-Stabilisator}}{c_{Photoinitiator}} \leq 0{,}25,\ (1)$$

wobei c die Konzentration der jeweiligen Substanz in mol/100 g Polymer ist
II) die Wellenlänge des Absorptionsmaximum des UV-Stabilisators und des Photoinitiators unterscheiden sich um plus/minus größer oder gleich 50 nm,

$$0{,}05 \leq \frac{c_{UV-Stabilisator}}{c_{Photoinitiator}} \leq 0{,}55,\ (2)$$

wobei c die Konzentration der jeweiligen Substanz in mol/100 g Polymer ist.

**15.** Verfahren nach Anspruch 14, **dadurch gekennzeichnet, dass** die UV-vernetzbaren Polyacrylat-Polymere ausgewählt sind aus

(a) Polymeren der Ester der Acrylsäure und/oder der Methacrylsäure,
(b) Acrylat-basierten Hybridsystemen, umfassend Polyester-Polyether-Hybride, Polyester-Polyether-basierte Urethan-Acrylate und Polyester-Polyether-basierte veresterte Acrylate sowie Co-Polymerisaten von (a) und (b).

**16.** Zusammensetzung erhältlich nach einem Verfahren gemäß einem der Ansprüche 14 und 15.

**17.** Verwendung der Zusammensetzung nach einem der Ansprüche 1 bis 13 sowie der Zusammensetzung erhältlich nach einem der Ansprüche 14 und 15 zum Herstellen von Transferklebebändern, Folien, Beschichtungen, Beschichtungen definierter Abmessungen, Klebebändern, ein- oder doppel-seitig beschichteten Trägern oder mit der schmelzbaren Haftklebemasse beschichteten Trägern, wobei die Träger Papier, textile Träger, Folien, Vliese und Gewebe umfassen.

**18.** Verwendung der Zusammensetzung nach einem der Ansprüche 1 bis 13 sowie der Zusammensetzung erhältlich nach einem der Ansprüche 14 und 15 zum Herstellen eines Haftmittels, einer Transferklebemasse, eines Transferklebebands, eines beschichteten Trägers.

**19.** Flächiges Haftmittel in Form eines mit einer UV-vernetzten Zusammensetzung nach einem der Ansprüche 1 bis 13 oder 16 beschichteten Trägers, wobei das flächige Haftmittel ausgewählt ist aus einem Etikett, Klebeband, Kabelwickel-band, einer Schutzfolie, einer flächigen Transferklebemasse und einem Transferklebeband.

**20.** Flächiges Haftmittel nach Anspruch 19, **dadurch gekennzeichnet, dass** es ein Klebeband ist, insbesondere zum Umwickeln von Kabeln, einen vorzugsweise textilen Träger umfasst und die UV-vernetzte Zusammensetzung auf

mindestens einer Seite des Trägers aufgebracht ist.

## Claims

1. Composition **characterized in that** the composition is a UV-crosslinkable and meltable pressure-sensitive adhesive comprising

(i) mixtures of UV-crosslinkable polyacrylate polymers, selected from

(i.a) mixtures of UV-crosslinkable polymers with at least one
photoinitiator bonded covalently to the backbone of the polymers and
(i.b) mixtures of UV-crosslinkable polyacrylate polymers, acrylate monomers and at least one photoinitiator, and

(ii) at least one UV stabilizer;
(iii) at least one stabilizer with respect to thermal reactions and ageing processes, from the group of primary and secondary ageing inhibitors; and

**in that** the UV stabilizer is present in the composition with a defined concentration which is harmonized with the concentration of the photoinitiator and is dependent on the ratio of the absorption maxima according to formulae 1 and 2 below, which are each applied subject to conditions I) and II):

I) the wavelength of the absorption maximum of the UV stabilizer and of the photoinitiator are different by plus/minus less than 50 nm,

$$0.01 \leq \frac{c_{UV-\text{stabilizer}}}{c_{photoinitiator}} \leq 0.25, \quad (1)$$

where c is the concentration of the respective substance in mol/100 g polymer,
II) the wavelength of the absorption maximum of the UV stabilizer and of the photoinitiator are different by plus/minus greater than or equal to 50 nm,

$$0.05 \leq \frac{c_{UV-\text{stabilizer}}}{c_{photoinitiator}} \leq 0.55, \quad (2)$$

where c is the concentration of the respective substance in mol/100 g polymer.

2. Composition according to Claim 1, **characterized in that** the UV stabilizer is selected from a UV absorber, UV inhibitor or mixtures comprising at least one UV absorber and one UV inhibitor.

3. Composition according to Claim 1 or 2, **characterized by** UV-crosslinkable polyacrylate polymers comprising

- polymers of the esters of acrylic acid and/or of methacrylic acid;
- acrylate-based hybrid systems comprising polyester-polyether hybrid systems, polyester-polyether-based urethane acrylates and polyester-polyether-based esterified acrylates, and also
- copolymers of

(a) monomeric acrylates or methacrylates or prepolymers of acrylates or methacrylates in each case independently with further
(b) radically polymerizable monomers and/or prepolymers and/or polymers comprising

(b.1) acrylates selected from linear, branched and cyclic, alkyl-functionalized alkyl (meth)acrylates comprising 1 to 18 C atoms,
(b.2) vinyl-substituted polymerizable monomers and/or prepolymers and/or polymers,
(b.3) hydrocarbons having two olefinic double bonds,

(b.4) monomers or prepolymers having at least one unsaturated, radically polymerizable group and at least one carboxylic, sulphonic or phosphonic acid group,
(b.5) monomers or prepolymers having at least one unsaturated, radically polymerizable group and at least one hydroxyl group,
(b.6) monomers or prepolymers having at least one unsaturated, radically polymerizable group and at least one other functional group selected from isocyanate, amino, amide, ether, polyether and glycidyl groups,

with selection as (b), in each case independently, of one or more radically polymerizable monomers, prepolymers or polymers or mixtures thereof.

**4.** Composition according to Claim 3, **characterized by** UV-crosslinkable polyacrylate polymers comprising copolymers of (a) monomeric acrylates or methacrylates or prepolymers of acrylates or methacrylates, in each case independently, with other (b.1) acrylates selected from linear, branched or cyclic, alkyl-functionalized alkyl (meth)acrylates comprising 1 to 18 C atoms, the polyacrylate being based, to an extent of greater than or equal to 40 wt.% to 100 wt.% of the polyacrylate, on alkyl-functionalized alkyl (meth)acrylates comprising 1 to 18 C atoms.

**5.** Composition according to Claim 3 or 4, **characterized in that** the UV-crosslinkable copolymers derive from

(a) esters of monomeric acrylates or methacrylates or prepolymers of acrylate esters or methacrylate esters and, in each case independently,
(b) at least one or more other radically polymerizable monomers and/or prepolymers and/or polymers selected from (b.1) to (b.6).

**6.** Composition according to any of Claims 1 to 5, **characterized in that** the UV stabilizers are selected from

1. organic UV absorbers which on induction by UV radiation form tautomeric structures, or inorganic UV absorbers, and
2. radical scavengers as UV inhibitors.

**7.** Composition according to Claim 2 or 6, **characterized in that**

- the organic UV absorbers comprise 2-hydroxyphenyl derivatives, oxalanilide derivatives, acrylic acid derivatives with aromatic substitution at C-3, organic nickel complexes or umbelliferone,
- the inorganic UV absorbers comprise metal oxides, and
- the UV inhibitors comprise alkyl-substituted hindered amines.

**8.** Composition according to Claim 2 or 6, **characterized in that**

- the organic UV absorbers comprise, as 2-hydroxyphenyl derivatives, 2-(2-hydroxyphenyl)-2H-benzotriazoles (formula IIa), (2-hydroxyphenyl)-s- triazines (formula IIb), hydroxybenzophenones (formula IIc) and oxalanilides (formula IId),

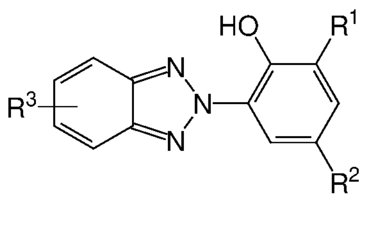

**IIa**

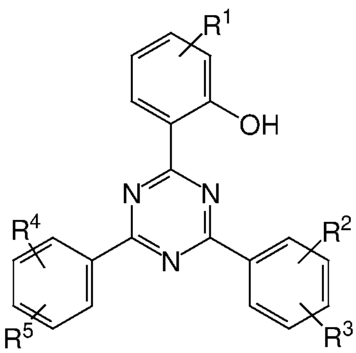

**IIb**

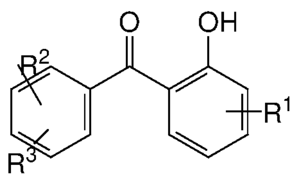

IIc

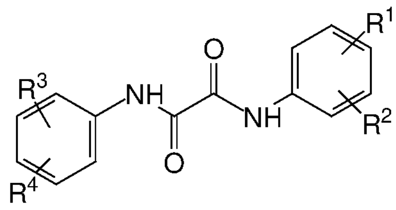

IId

where $R^1$, $R^2$ $R^3$, $R^4$ and $R^5$ in each case independently of one another correspond to a hydrogen atom or to an alkyl group,
- the acrylic acid derivatives with aromatic substitution at C-3 comprise phenyl-substituted cinnamic acid derivatives and urocanic acid,
- the inorganic UV absorbers comprise, as metal oxides, titanium dioxide,
iron oxide or zinc oxide, and
- the UV inhibitors comprise, as alkyl-substituted hindered amines, 2,2,6,6-alkyl-substituted piperidine derivatives.

**9.** Composition according to any of Claims 3 to 5, **characterized in that** it comprises less than or equal to 2 parts by weight to 0.0001 part by weight of an organic solvent and/or water, based on 100 parts by weight of polyacrylate.

**10.** Composition according to Claim 1, **characterized in that**

- the at least one photoinitiator which is present in the mixture according to (i.a) is selected from acetophenone, benzoin ethers, benzyl dialkyl ketols, benzophenone, benzil, thioxanthone, phenylglyoxylate, benzoylphosphinate, benzoylphosphine oxide, bisbenzoylphosphine oxide, $\alpha$-amino ketone or derivatives thereof, or titanocene, bis[$\eta^5$-2,4-cyclopentadien-1-yl)bis[2,6-difluoro-3-(1*H*-pyrrol-1-yl)phenyl]titanium, oxime esters, [1-(4-phenylsulphanylbenzoyl)heptylideneamino]benzoate and [1-[9-ethyl-6-(2-methylbenzoyl)carbazol-3-yl]ethylideneamino]acetate and derivatives thereof, or
- the at least one photoinitiator which is bonded covalently to the polymer backbone according to (i.b) is copolymerized into the polymer backbone by radical copolymerization of an ethylenically substituted linker-photoinitiator group, the photoinitiator group comprising a radical derived from acetophenone, benzoin ethers, benzil dialkyl ketals, benzophenone, benzil, thioxanthone, phenylglyoxylate, benzoylphosphinate, benzoylphosphine oxide, bisbenzoylphosphine oxide, $\alpha$-amino ketone or derivatives thereof, or titanocene, bis[$\eta^5$-2,4-cyclopentadien-1-yl)bis[2,6-difluoro-3-(1*H*-pyrrol-1-yl)phenyl]titanium, oxime esters, [1-(4-phenylsulphanylbenzoyl)heptylideneamino]benzoate and [1-[9-ethyl-6-(2-methylbenzoyl)carbazol-3-yl]ethylideneamino]acetate and derivatives thereof.

**11.** Composition according to any of Claims 1 to 9, **characterized in that** it comprises, in each case independently, per 100 parts by weight of polyacrylate

- 0.0001 to 1 mol of photoinitiator per 100 parts by weight of polyacrylate,
- 0 to 2 parts by weight of solvent,
- 0.05 to 5 parts by weight of primary and/or secondary ageing inhibitors having a molecular weight of less than or equal to 1500 g/mol, polymeric
ageing inhibitors comprising hydroxyl groups and optionally ether groups
or having at least one phosphite group, and
- 0 to 80 parts by weight of tackifier resins.

**12.** Composition according to any of Claims 1 to 11, **characterized in that** the K value of the polyacrylate is greater than or equal to 30 to 80, measured according to the method described herein as a one per cent strength (1 g/100 mL) toluenic polymer solution at 25°C.

**13.** Composition according to any of Claims 1 to 12, **characterized in that** the static glass transition temperature (Tg) of the polyacrylate, measured according to ASTM 3418/82 as the midpoint temperature, is greater than or equal to -60 to +10°C.

**14.** Method for producing a composition according to any of Claims 1 to 13, being a UV-crosslinkable and meltable pressure-sensitive adhesive, said method comprising the mixing of

(i) mixtures of UV-crosslinkable polyacrylate polymers, selected from

(i.a) mixtures of UV-crosslinkable polymers with at least one
photoinitiator bonded covalently to the backbone of the polymers and
(i.b) mixtures of UV-crosslinkable polyacrylate polymers, acrylate monomers and at least one photoinitiator, with

(ii) at least one UV stabilizer;
(iii) at least one stabilizer with respect to thermal reactions and ageing processes, from the group of primary and secondary ageing inhibitors; and

in that the UV stabilizer is present in the composition with a defined concentration which is harmonized with the concentration of the photoinitiator and is dependent on the ratio of the absorption maxima according to formulae 1 and 2 below, which are each applied subject to conditions I) and II):

I) the wavelength of the absorption maximum of the UV stabilizer and of the photoinitiator are different by plus/minus less than 50 nm,

$$0.01 \leq \frac{c_{UV-\text{stabilizer}}}{c_{photoinitiator}} \leq 0.25, \ (1)$$

where c is the concentration of the respective substance in mol/100 g polymer,
II) the wavelength of the absorption maximum of the UV stabilizer and of the photoinitiator are different by plus/minus greater than or equal to 50 nm,

$$0.05 \leq \frac{c_{UV-\text{stabilizer}}}{c_{photoinitiator}} \leq 0.55, \ (2)$$

where c is the concentration of the respective substance in mol/100 g polymer.

**15.** Method according to Claim 14, **characterized in that** the UV-crosslinkable polyacrylate polymers are selected from

(a) polymers of the esters of acrylic acid and/or of methacrylic acid,
(b) acrylate-based hybrid systems, comprising polyester-polyether hybrids, polyester-polyether-based urethane acrylates and polyester-polyether-based esterified acrylates, and also copolymers of (a) and (b).

**16.** Composition obtainable by a method according to either of Claims 14 and 15.

**17.** Use of the composition according to any of Claims 1 to 13 and of the composition obtainable according to either of Claims 14 and 15 for producing adhesive transfer tapes, sheets, coatings, coatings with defined dimensions, adhesive tapes, single- or double-sidedly coated carriers, or carriers coated with the meltable pressure-sensitive adhesive, the carriers comprising paper, textile carriers, films, nonwoven webs and woven fabrics.

**18.** Use of the composition according to any of Claims 1 to 13 and of the composition obtainable according to either of Claims 14 and 15 for producing a bonding agent, a transfer adhesive, an adhesive transfer tape and/or a coated carrier.

**19.** Flat bonding agent in the form of a carrier coated with a UV-crosslinked composition according to any of Claims 1 to 13 or 16, the flat bonding agent being selected from a label, adhesive tape, cable wrapping tape, a protective sheet, a flat transfer adhesive and an adhesive transfer tape.

**20.** Flat bonding agent according to Claim 19, **characterized in that** it is an adhesive tape, intended more particularly for wrapping cables, comprising a preferably textile carrier with the UV-crosslinked composition applied to at least

one side of the carrier.

## Revendications

1. Composition **caractérisée en ce que** la composition est une masse autoadhésive réticulable par les UV et fusible, comprenant

   (i) des mélanges de polymères réticulables par les UV de type polyacrylate, qui sont choisis parmi

      (i.a) des mélanges de polymères réticulables par les UV comportant au moins un photoinitiateur, qui est lié de manière covalente au squelette de polymère des polymères, et
      (i.b) des mélanges de polymères réticulables par les UV de type polyacrylate, de monomères de type acrylate et d'au moins un photoinitiateur ainsi que

   (ii) au moins un stabilisant UV ;
   (iii) au moins un stabilisant vis-à-vis de réactions thermiques et de processus de vieillissement du groupe des agents de protection primaires et secondaires contre le vieillissement ;
   et

   **en ce que** le stabilisant UV est présent en une concentration définie dans la composition, qui est réglée sur la concentration du photoinitiateur et qui dépend du rapport des maxima d'absorption selon les formules suivantes 1 et 2, qui à chaque fois sont appliquées dans les conditions préalables I) et II) :

   I) les longueurs d'onde du maximum d'absorption du stabilisant UV et du photoinitiateur sont différentes d'une valeur plus ou moins inférieure à 50 nm,

$$0{,}01 \leq c_{\text{stabilisant UV}}/c_{\text{photoinitiateur}} \leq 0{,}25, \quad (1)$$

   c étant la concentration de la substance respective en moles/100 g de polymère,
   II) les longueurs d'onde du maximum d'absorption du stabilisant UV et du photoinitiateur sont différentes d'une valeur plus ou moins supérieure ou égale à 50 nm,

$$0{,}05 \leq c_{\text{stabilisant UV}}/c_{\text{photoinitiateur}} \leq 0{,}55, \quad (2)$$

   c étant la concentration de la substance respective en moles/100 g de polymère.

2. Composition selon la revendication 1, **caractérisée en ce que** le stabilisant UV est choisi parmi un absorbant UV, un inhibiteur UV ou des mélanges contenant au moins à chaque fois un absorbant UV et un inhibiteur UV.

3. Composition selon la revendication 1 ou 2, **caractérisée par** des polymères réticulables par les UV de type polyacrylate comprenant

   - des polymères des esters d'acide acrylique et/ou d'acide méthacrylique ;
   - des systèmes hybrides à base d'acrylate comprenant des systèmes hybrides polyester-polyéther, des uréthanes-acrylates à base de polyester-polyéther et des acrylates estérifiés à base de polyester-polyéther, ainsi que
   - des copolymérisats

      (a) d'acrylates ou de méthacrylates monomériques ou de prépolymères d'acrylates ou de méthacrylates à chaque fois indépendamment avec d'autres
      (b) monomères et/ou prépolymères et/ou polymères polymérisables par voie radicalaire comprenant

         (b.1) des acrylates choisis parmi des alkyl(méth)acrylates fonctionnalisés par alkyle linéaires, ramifiés et cycliques comprenant 1 à 18 atome(s) de C,
         (b.2) des monomères et/ou des prépolymères et/ou des polymères polymérisables substitués par vinyle,

(b.3) des hydrocarbures comportant deux doubles liaisons oléfiniques,
(b.4) des monomères ou des prépolymères comportant au moins un groupe insaturé polymérisable par voie radicalaire et au moins un groupe acide carboxylique, acide sulfonique ou acide phosphonique,
(b.5) des monomères ou des prépolymères comportant au moins un groupe insaturé polymérisable par voie radicalaire et au moins un groupe hydroxyle,
(b.6) des monomères ou des prépolymères comportant au moins un groupe insaturé polymérisable par voie radicalaire et au moins un groupe fonctionnel supplémentaire choisi parmi des groupes isocyanate, amino, amide, éther, polyéther et glycidyle,

à chaque fois indépendamment un ou plusieurs monomères, prépolymères ou polymères polymérisables par voie radicalaire ou des mélanges de ceux-ci étant choisis en tant que (b).

**4.** Composition selon la revendication 3, **caractérisée par** des polymères réticulables par les UV de type polyacrylate comprenant des copolymérisats (a) d'acrylates ou de méthacrylates monomériques ou des prépolymères d'acrylates ou de méthacrylates à chaque fois indépendamment avec d'autres (b.1) acrylates choisis parmi des alkyl(méth)acrylates fonctionnalisés par alkyle linéaires, ramifiés ou cycliques comprenant 1 à 18 atome(s) de C, le polyacrylate étant à base, en une quantité supérieure ou égale à 40 % en poids jusqu'à 100 % en poids du polyacrylate, d'alkyl (méth)acrylates fonctionnalisés par alkyle comprenant 1 à 18 atome(s) de C.

**5.** Composition selon la revendication 3 ou 4, **caractérisée en ce que** les copolymérisats réticulables par les UV sont issus

(a) d'esters d'acrylates ou de méthacrylates monomériques ou de prépolymères d'esters d'acrylate ou d'esters de méthacrylate et à chaque fois indépendamment
(b) d'au moins un ou plusieurs monomères et/ou prépolymères et/ou polymères polymérisables par voie radicalaire supplémentaires choisis parmi (b.1) à (b.6).

**6.** Composition selon l'une quelconque des revendications 1 à 5, **caractérisée en ce que** les stabilisants UV sont choisis parmi

1. des absorbants UV organiques, qui forment des structures tautomères induites par un rayonnement UV, ou des absorbants UV inorganiques et
2. des capteurs de radicaux en tant qu'inhibiteur UV.

**7.** Composition selon la revendication 2 ou 6, **caractérisée en ce que**

- les absorbants UV organiques comprennent des dérivés de 2-hydroxyphényle, des dérivés d'oxalanilide, des dérivés d'acide acrylique substitués en C-3 de manière aromatique, des complexes organiques du nickel ou de l'ombelliférone,
- les absorbants UV inorganiques comprennent des oxydes métalliques, et
- les inhibiteurs UV comprennent des amines encombrées substituées par alkyle.

**8.** Composition selon la revendication 2 ou 6, **caractérisée en ce que**

- les absorbants UV organiques comprennent, en tant que dérivés de 2-hydroxyphényle, des 2-(2-hydroxyphényl)-2*H*-benzotriazole (formule IIa), des (2-hydroxyphényl)-s-triazines (formule, IIb), des hydroxybenzophénones (formule IIc) et des oxalanilides (formule IId),

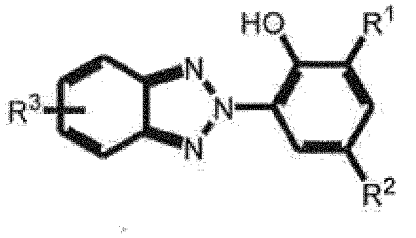

IIa

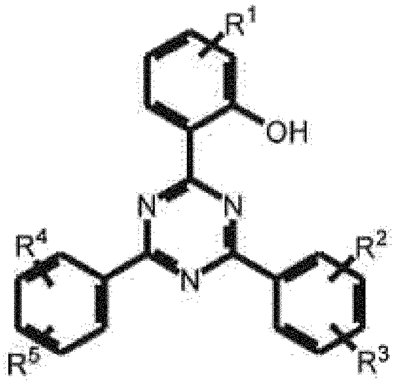

IIb

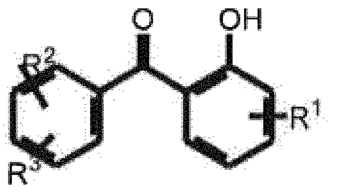

IIc

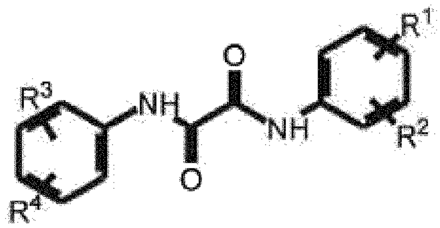

IId

$R^1$, $R^2$, $R^3$, $R^4$ et $R^5$ à chaque fois indépendamment les uns des autres correspondant à un atome d'hydrogène ou un groupe alkyle,
- les dérivés d'acide acrylique substitués en C-3 de manière aromatique comprennent des dérivés d'acide cinnamique substitués par phényle et l'acide urocanique,
- les absorbants UV inorganiques comprennent du dioxyde de titane, de l'oxyde de fer ou de l'oxyde de zinc en tant qu'oxydes métalliques
- les inhibiteurs UV comprennent en tant qu'amines encombrées substituées par alkyle des dérivés de pipéridine substitués en 2,2,6,6 par alkyle.

**9.** Composition selon l'une quelconque des revendications 3 à 5, **caractérisée en ce qu'**elle contient une quantité inférieure ou égale à 2 parties en poids jusqu'à 0,0001 partie en poids, par rapport à 100 parties en poids de polyacrylate, d'un solvant organique et/ou d'eau.

**10.** Composition selon la revendication 1, **caractérisée en ce que**

- l'au moins un photoinitiateur présent selon (i.a) dans le mélange est choisi parmi l'acétophénone, des éthers de benzoïne, des benzyldialkylcétols, la benzophénone, le benzile, la thioxanthone, le glyoxylate de phényle, le phosphinate de benzoyle, l'oxyde de benzoylphosphine, l'oxyde de bisbenzoylphosphine, des $\alpha$-aminocétones ou leurs dérivés, ou le titanocène, le bis-[$\eta^5$-2,4-cyclopentadién-1-yl]-bis-[2,6-difluoro-3-(1*H*-pyrrol-1-yl)phényl]-titane, des esters d'oxime, le [1-(4-phénylsulfanylbenzoyle)heptilydènamino]benzoate et le [1-[9-éthyl-6-(2-méthylbenzoyl)-carbazol-3-yl]éthylidèneamino]acétate et leurs dérivés, ou
- l'au moins un photoinitiateur lié de manière covalente au squelette de polymère selon (i.b) est polymérisé dans le squelette de polymère par copolymérisation par voie radicalaire d'un groupe lieur éthyléniquement substitué-photoinitiateur, le groupe photoinitiateur comprenant un radical qui est issu de l'acétophénone, des éthers de benzoïne, des benzyldialkylcétols, de la benzophénone, du benzile, de la thioxanthone, du glyoxylate de phényle, du phosphinate de benzoyle, de l'oxyde de benzoylphosphine, de l'oxyde de bisbenzoylphosphine, des $\alpha$-aminocétones ou leurs dérivés, ou du titanocène, du bis-[$\eta^5$-2,4-cyclopentadién-1-yl]-bis-[2,6-difluoro-3-(1*H*-pyrrol-1-yl)phényl]-titane, des esters d'oxime, du [1-(4-phénylsulfanylbenzoyle)heptylidènamino]benzoate et du [1-[9-éthyl-6-(2-méthylbenzoyl)-carbazol-3-yl]éthylidèneamino]acétate et de leurs dérivés.

**11.** Composition selon l'une quelconque des revendications 1 à 9, **caractérisée en ce que** la composition contient à

chaque fois indépendamment pour 100 parties en poids de polyacrylate

- 0,0001 à 1 mole de photoinitiateur pour 100 parties en poids de polyacrylate,
- 0 à 2 partie(s) en poids de solvant,
- 0,05 à 5 partie(s) en poids d'agents primaires et/ou secondaires de protection contre le vieillissement dotés d'un poids moléculaire inférieur ou égal à 1 500 g/mole, des agents de protection contre le vieillissement polymériques contenant des groupes hydroxy et éventuellement des groupes éther ou comportant au moins un groupe phosphite, et
- 0 à 80 partie(s) en poids de résines adhésives.

**12.** Composition selon l'une quelconque des revendications 1 à 11, **caractérisée en ce que** la valeur K du polyacrylate est supérieure ou égale à 30 jusqu'à 80, mesurée par la méthode décrite ici en tant que solution de polymère à un pour cent dans le toluène (1 g/100 mL) à 25 °C.

**13.** Composition selon l'une quelconque des revendications 1 à 12, **caractérisée en ce que** la température de transition vitreuse statique (Tv), mesurée selon la norme ASTM 3418/82 en tant que « température de point milieu », du polyacrylate est supérieure ou égale à -60 jusqu'à +10 °C.

**14.** Procédé pour la préparation d'une composition selon l'une quelconque des revendications 1 à 13, qui est une masse autoadhésive réticulable par les UV et fusible, comprenant le mélange de

(i) mélanges de polymères réticulables par les UV de type polyacrylate, qui sont choisis parmi

(i.a) des mélanges de polymères réticulables par les UV comportant au moins un photoinitiateur, qui est lié de manière covalente au squelette de polymère des polymères, et
(i.b) des mélanges de polymères réticulables par les UV de type polyacrylate, de monomères de type acrylate et d'au moins un photoinitiateur ainsi que

(ii) au moins un stabilisant UV ;
(iii) au moins un stabilisant vis-à-vis de réactions thermiques et de processus de vieillissement du groupe des agents de protection primaires et secondaires contre le vieillissement ;

l'au moins un stabilisant UV étant utilisé en une concentration définie, qui est réglée sur la concentration du photoinitiateur et qui dépend du rapport des maxima d'absorption selon les formules suivantes 1 et 2, qui à chaque fois sont appliquées dans les conditions préalables I) et II) :

I) les longueurs d'onde du maximum d'absorption du stabilisant UV et du photoinitiateur sont différentes d'une valeur plus ou moins inférieure à 50 nm,

$$0{,}01 \leq c_{\text{stabilisant UV}}/c_{\text{photoinitiateur}} \leq 0{,}25, \quad (1)$$

c étant la concentration de la substance respective en moles/100 g de polymère,
II) les longueurs d'onde du maximum d'absorption du stabilisant UV et du photoinitiateur sont différentes d'une valeur plus ou moins supérieure ou égale à 50 nm,

$$0{,}05 \leq c_{\text{stabilisant UV}}/c_{\text{photoinitiateur}} \leq 0{,}55, \quad (2)$$

c étant la concentration de la substance respective en moles/100 g de polymère.

**15.** Procédé selon la revendication 14, **caractérisé en ce que** les polymères réticulables par les UV de type polyacrylate sont choisis parmi

(a) des polymères des esters d'acide acrylique et/ou d'acide méthacrylique,
(b) des systèmes hybrides à base d'acrylate, comprenant des hybrides polyester-polyéther, des uréthanes-acrylates à base de polyester-polyéther et des acrylates estérifiés à base de polyester-polyéther, ainsi que des copolymérisats de (a) et de (b).

**16.** Composition pouvant être obtenue par un procédé selon l'une quelconque des revendications 14 et 15.

**17.** Utilisation de la composition selon l'une quelconque des revendications 1 à 13 ainsi que de la composition pouvant être obtenue selon l'une quelconque des revendications 14 et 15 pour la préparation de bandes adhésives de transfert, de feuilles, de revêtements, de revêtements de dimensions définies, de bandes adhésives, de supports revêtus sur une face ou sur deux faces ou de supports revêtus avec la masse autoadhésive fusible, les supports comprenant du papier, des supports textiles, des feuilles, des feutres et des tissus.

**18.** Utilisation de la composition selon l'une quelconque des revendications 1 à 13 ainsi que de la composition pouvant être obtenue selon l'une quelconque des revendications 14 et 15 pour la préparation d'un moyen adhésif, d'une masse adhésive de transfert, d'une bande adhésive de transfert, d'un support revêtu.

**19.** Moyen adhésif en nappe sous forme d'un support revêtu avec une composition réticulée par les UV selon l'une quelconque des revendications 1 à 13 ou 16, le moyen adhésif en nappe étant choisi parmi une étiquette, une bande adhésive, une bande d'enroulement de câble, une feuille protectrice, une masse adhésive de transfert en nappe et une bande adhésive de transfert.

**20.** Moyen adhésif en nappe selon la revendication 19, **caractérisé en ce qu'**il est une bande adhésive, en particulier pour l'enroulement de câbles, qu'il comprend un support de préférence textile et qu'une composition réticulée par les UV est appliquée sur au moins un côté du support.

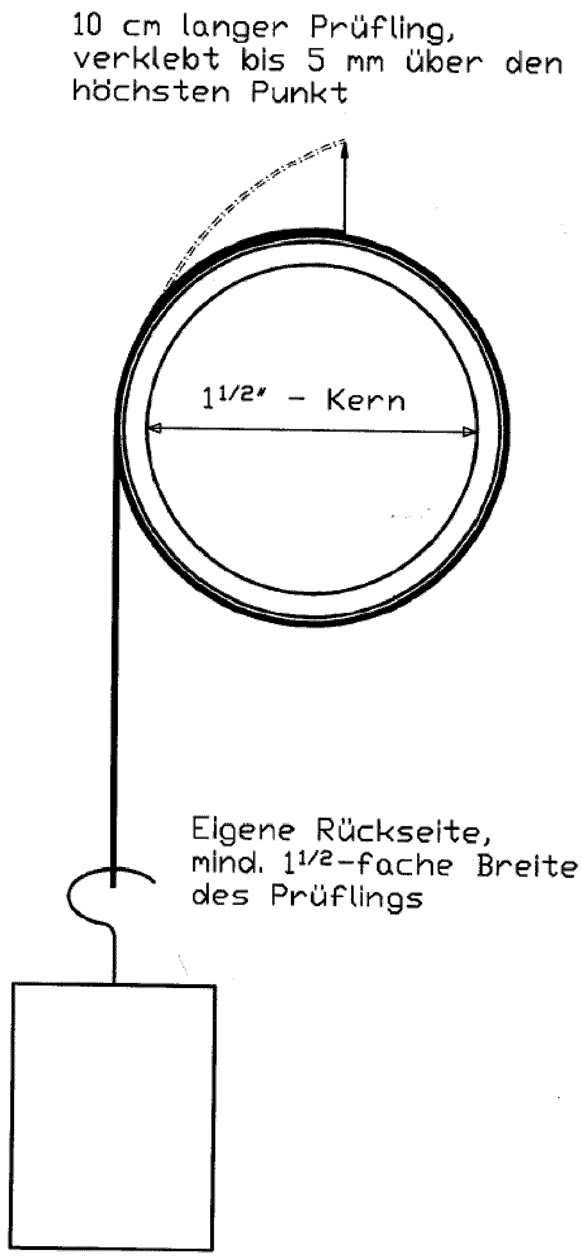
10 cm langer Prüfling, verklebt bis 5 mm über den höchsten Punkt
1 1/2" - Kern
Eigene Rückseite, mind. 1 1/2-fache Breite des Prüflings

Fig. 1

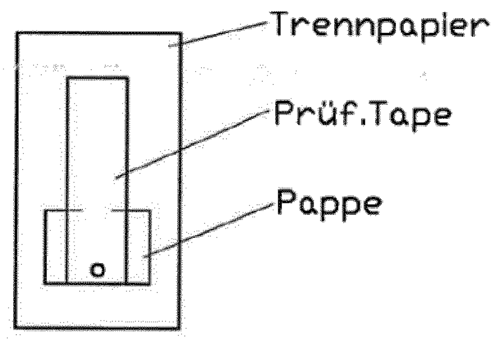
Trennpapier
Prüf.Tape
Pappe

Fig. 2

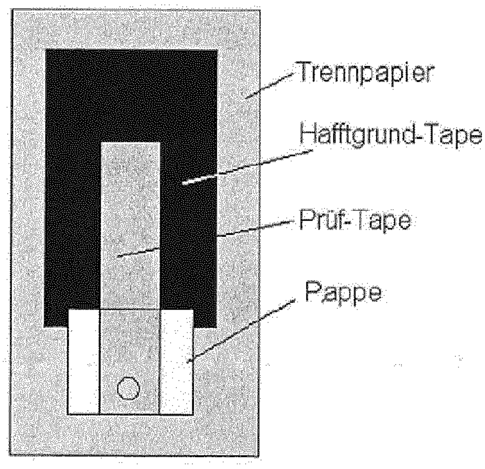
Trennpapier
Hafftgrund-Tape
Prüf-Tape
Pappe

Fig. 3

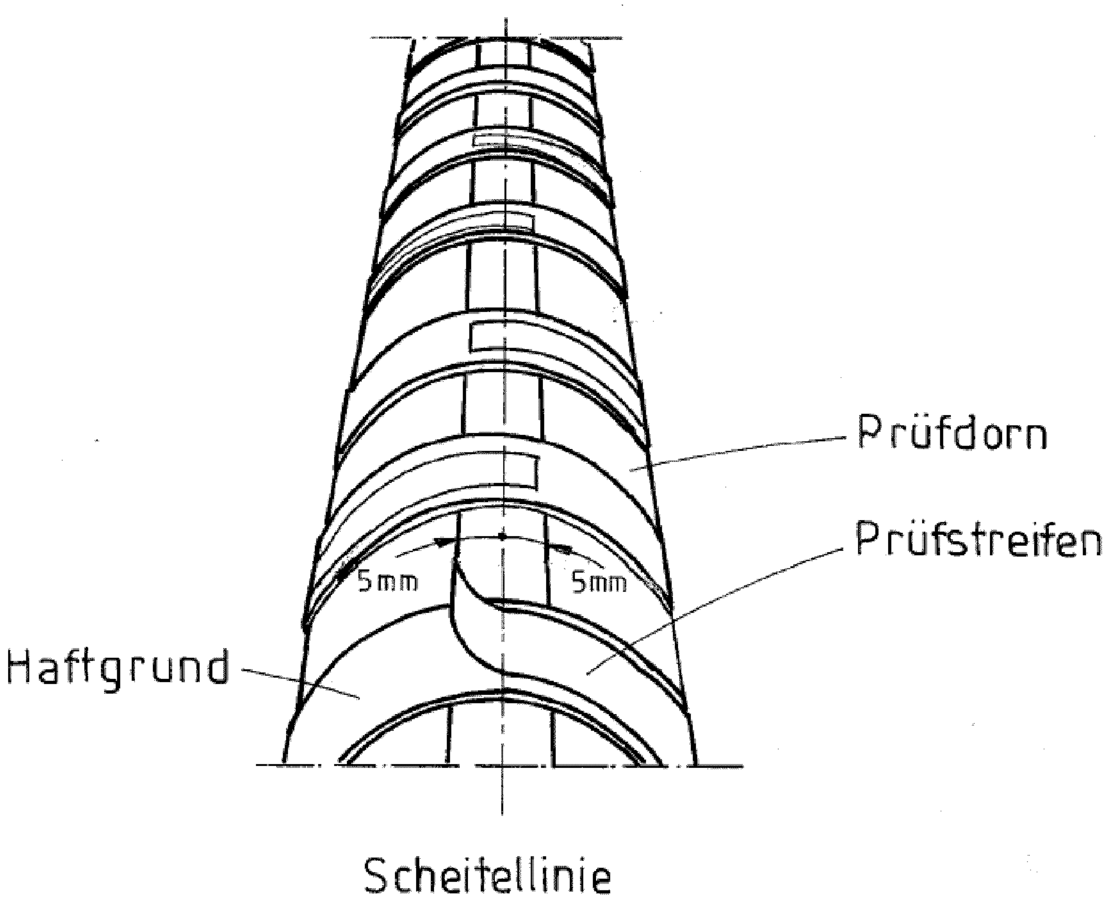


Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2411169 A
- EP 246848 A
- DE 4037079 A
- DE 3844444 A
- US 2001024699 A1
- US 2004167262 A1
- US 2005239916 A1
- EP 346734 A
- EP 377199 A
- US 4042768 A


### In der Beschreibung aufgeführte Nicht-Patentliteratur


- *Polymer,* 1967, vol. 8, 381
- *Polymer,* 1967, vol. 8, 381 ff